# EUROPEAN PATENT APPLICATION

(11) **EP 4 780 085 A1**
(43) Date of publication of application: **22.07.2026**
(21) Application number: 24864757.0
(22) Date of filing: 13.09.2024
(51) Int. Cl.: H04W 52/02

(54) **COMMUNICATION METHOD AND APPARATUS, AND STORAGE MEDIUM**

(30) Priority: 15.09.2023 CN 202311199730
(71) Applicant: Datang Mobile Communications Equipment Co., Ltd., Beijing 100085 (CN)
(72) Inventor: DUAN, Xiaoyan, Beijing 100085 (CN)
(74) Representative: Studio Torta S.p.A.
(86) International application number: PCT/CN2024/118887
(87) International publication number: WO 2025/056042

(57) **Abstract**

Provided are a communication method and apparatus, and a storage medium. The method comprises: determining multi-access related subscription data or a first multi-access related policy, the multi-access related subscription data or the first multi-access related policy being used for controlling a UE to use a first access technology (AT) and/or a second AT to perform communication; and on the basis of the multi-access related subscription data or the first multi-access related policy, using the first AT and/or the second AT to perform communication.

## Description

### CROSS-REFERENCES TO RELATED APPLICATIONS

The present application claims priority to Chinese patent application No. 202311199730.4, filed on September 15, 2023, entitled "Communication Method and Apparatus, and Storage Medium", which is incorporated herein by reference in its entirety.

### FIELD

The present application relates to the field of communications, and in particular to a communication method, apparatus and storage medium.

### BACKGROUND

In 5G (5th generation mobile communication) networks, by transmitting a policy or rule (e.g., user equipment (UE) routing selection policy (URSP), access traffic steering switching splitting (ATSSS) rule) for transmission of application/service data over (single-access) protocol data unit (PDU) sessions and/or multi-access PDU sessions to a terminal/UE, the UE may be instructed to select which one or more access technologies to transmit the application/service data.

However, when the UE uses multi-access to simultaneously connect to the network and/or to transmit data, the energy consumption of the network and UE is increased. In UE multi-access scenarios, existing technologies fail to provide effective solutions to reduce the energy consumption of the network and UE or improve the energy efficiency.

### BRIEF SUMMARY

The present application provides a communication method, apparatus and storage medium, to solve the problem of high energy consumption in the network or UE in the related art.

In a first aspect, an embodiment of the present application provides a communication method, performed by a user equipment (UE), including:
determining multi-access related subscription data or a first multi-access related policy, where the multi-access related subscription data or the first multi-access related policy is used to control the UE to use a first access technology (AT) and/or a second AT for communication; and
using, based on the multi-access related subscription data or the first multi-access related policy, the first AT and/or the second AT for communication;
where determining the multi-access related subscription data or the first multi-access related policy includes:
   determining the multi-access related subscription data or the first multi-access related policy based on access related information, where the access related information includes one or a combination of following:
   information on energy consumption of the UE using the first AT and/or the second AT;
   information on energy consumption of a network corresponding to the first AT and/or the second AT;
   information on energy efficiency of the UE using the first AT and/or the second AT; or
   information on energy efficiency of a network corresponding to the first AT and/or the second AT.

In some embodiments, using, based on the multi-access related subscription data or the first multi-access related policy, the first AT and/or the second AT for communication includes:
in case of registering with a first network using the first AT and the second AT, using, based on the multi-access related subscription data or the first multi-access related policy, the first AT and/or the second AT for communication; or
in case of initiating registration with a first network using the second AT after registering with the first network using the first AT, using, based on the multi-access related subscription data or the first multi-access related policy, the first AT and/or the second AT for communication.

In some embodiments, using, based on the multi-access related subscription data or the first multi-access related policy, the first AT and/or the second AT for communication includes: performing one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

In some embodiments, before determining the multi-access related subscription data or the first multi-access related policy based on the access related information, the method further includes:
obtaining the access related information from a first network function entity.

In some embodiments, obtaining the access related information from the first network function entity includes:
transmitting a first message to the first network function entity, where the first message is used to request the access related information; and
receiving the access related information from the first network function entity;
where the first message and/or the access related information carries first description information on the UE using the first AT and/or the second AT, and the first description information includes one or more of following:
   an AT type;
   frequency information;
   a slice identifier;
   a data network identifier;
   a session identifier;
   an application identifier;
   UE location information;
   second time information, used to indicate applicable time of the access related information;
   second area information, used to indicate an applicable area of the access related information;
   information on a second energy consumption threshold, used to instruct the first network function entity, in case that the UE using the first AT and/or the second AT reaches or exceeds the second energy consumption threshold, to report the access related information; or
   information on a second energy efficiency threshold, used to instruct the first network function entity, in case that the UE using the first AT and/or the second AT reaches or falls below the second energy efficiency threshold, to report the access related information.

In some embodiments, the information on energy consumption of the UE using the first AT and/or the second AT includes one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
   and/or,
where the information on energy efficiency of the UE using the first AT and/or the second AT includes one or more of following:
   information on energy efficiency of the UE using the first AT and/or the second AT to support a specific application or service;
   information on energy efficiency of the UE using the first AT and/or the second AT to support a session of a specific data network;
   information on energy efficiency of the UE using the first AT and/or the second AT to support a session of a specific network slice; or
   information on statistics or prediction of energy efficiency of the UE using the first AT and/or the second AT.

In some embodiments, the information on energy consumption of the network corresponding to the first AT and/or the second AT includes one or more of following:
information on current energy consumption of the network corresponding to the first AT and/or the second AT; or
information on statistics or prediction of energy consumption of the network corresponding to the first AT and/or the second AT,
   and/or,
where the information on energy efficiency of the network corresponding to the first AT and/or the second AT includes one or more of following:
   information on current energy efficiency of the network corresponding to the first AT and/or the second AT; or
   information on statistics or prediction of energy efficiency of the network corresponding to the first AT and/or the second AT.

In some embodiments, the multi-access related subscription data or the first multi-access related policy includes one or more of following:
information on multiple ATs allowed or prohibited to be simultaneously used;
information on a network slice allowing or prohibiting simultaneous use of multiple ATs for access;
information on a data network allowing or prohibiting simultaneous use of multiple ATs for access;
multiple ATs arranged by priority, in case that a high-priority AT is used, a connection corresponding to a low-priority AT is released;
a policy for transmission of applications or services over connections or sessions corresponding to different ATs in case that multiple ATs are simultaneously used;
a first timer, used to indicate that in case that successfully registering with a first network or successfully establishing a session via the second AT exceeds a duration of the first timer, a connection or session corresponding to the first AT is released or modified;
first time information, used to indicate application of one or more of above policies within a time range specified by the first time information;
first area information, used to indicate application of one or more of above policies within an area specified by the first area information;
information on a first energy consumption threshold, used to indicate that in case that the UE using the first AT and/or the second AT reaches or exceeds the first energy consumption threshold, one or more of above policies are applied;
information on a first energy efficiency threshold, used to indicate that in case that the UE using the first AT and/or the second AT reaches or falls below the first energy efficiency threshold, one or more of above policies are applied.

In some embodiments, determining the multi-access related subscription data or the first multi-access related policy further includes:
obtaining the multi-access related subscription data or the first multi-access related policy from a second network function entity.

In a second aspect, an embodiment of the present application provides a communication method, performed by a network device, including:
determining multi-access related subscription data or a first multi-access related policy, where the multi-access related subscription data or the first multi-access related policy is used to control a user equipment (UE) to use a first access technology (AT) and/or a second AT for communication; and
controlling, based on the multi-access related subscription data or the first multi-access related policy, the UE to use the first AT and/or the second AT for communication;
where determining the multi-access related subscription data or the first multi-access related policy includes:
   determining the multi-access related subscription data or the first multi-access related policy based on access related information, where the access related information includes one or a combination of following:
   information on energy consumption of the UE using the first AT and/or the second AT;
   information on energy consumption of a network corresponding to the first AT and/or the second AT;
   information on energy efficiency of the UE using the first AT and/or the second AT; or
   information on energy efficiency of a network corresponding to the first AT and/or the second AT.

In some embodiments, controlling, based on the multi-access related subscription data or the first multi-access related policy, the UE to use the first AT and/or the second AT for communication includes:
in case that the UE registers with a first network using the first AT and the second AT, controlling, based on the multi-access related subscription data or the first multi-access related policy, the UE to use the first AT and/or the second AT for communication; or
in case that the UE initiates registration with a first network using the second AT after registering with the first network using the first AT, controlling, based on the multi-access related subscription data or the first multi-access related policy, the UE to use the first AT and/or the second AT for communication.

In some embodiments, controlling, based on the multi-access related subscription data or the first multi-access related policy, the UE to use the first AT and/or the second AT for communication includes:
transmitting the multi-access related subscription data or the first multi-access related policy to the UE.

In some embodiments, controlling, based on the multi-access related subscription data or the first multi-access related policy, the UE to use the first AT and/or the second AT for communication includes:
controlling the UE to perform one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

In some embodiments, before determining the multi-access related subscription data or the first multi-access related policy based on the access related information, the method further includes:
obtaining the access related information from a first network function entity.

In some embodiments, obtaining the access related information from the first network function entity includes:
transmitting a first message to the first network function entity, where the first message is used to request the access related information; and
receiving the access related information from the first network function entity;
where the first message and/or the access related information carries first description information on the UE using the first AT and/or the second AT, and the first description information includes one or more of following:
   an AT type;
   frequency information;
   a slice identifier;
   a data network identifier;
   a session identifier;
   an application identifier;
   UE location information;
   second time information, used to indicate applicable time of the access related information;
   second area information, used to indicate an applicable area of the access related information;
   information on a second energy consumption threshold, used to instruct the first network function entity, in case that the UE using the first AT and/or the second AT reaches or exceeds the second energy consumption threshold, to report the access related information; or
   information on a second energy efficiency threshold, used to instruct the first network function entity, in case that the UE using the first AT and/or the second AT reaches or falls below the second energy efficiency threshold, to report the access related information.

In some embodiments, the information on energy consumption of the UE using the first AT and/or the second AT includes one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
   and/or,
where the information on energy efficiency of the UE using the first AT and/or the second AT includes one or more of following:
   information on energy efficiency of the UE using the first AT and/or the second AT to support a specific application or service;
   information on energy efficiency of the UE using the first AT and/or the second AT to support a session of a specific data network;
   information on energy efficiency of the UE using the first AT and/or the second AT to support a session of a specific network slice; or
   information on statistics or prediction of energy efficiency of the UE using the first AT and/or the second AT.

In some embodiments, the information on energy consumption of the network corresponding to the first AT and/or the second AT includes one or more of following:
information on current energy consumption of the network corresponding to the first AT and/or the second AT; or
information on statistics or prediction of energy consumption of the network corresponding to the first AT and/or the second AT,
   and/or,
where the information on energy efficiency of the network corresponding to the first AT and/or
the second AT includes one or more of following:
   information on current energy efficiency of the network corresponding to the first AT and/or the second AT; or
   information on statistics or prediction of energy efficiency of the network corresponding to the first AT and/or the second AT.

In a third aspect, an embodiment of the present application provides a user equipment (UE), including a memory, a transceiver, and a processor,
where the memory is used for storing a computer program, the transceiver is used for transmitting and receiving data under control of the processor, and the processor is used for reading the computer program in the memory and performing following operations:
determining multi-access related subscription data or a first multi-access related policy, where the multi-access related subscription data or the first multi-access related policy is used to control the UE to use a first access technology (AT) and/or a second AT for communication; and
using, based on the multi-access related subscription data or the first multi-access related policy, the first AT and/or the second AT for communication;
where determining the multi-access related subscription data or the first multi-access related policy includes:
   determining the multi-access related subscription data or the first multi-access related policy based on access related information, where the access related information includes one or a combination of following:
   information on energy consumption of the UE using the first AT and/or the second AT;
   information on energy consumption of a network corresponding to the first AT and/or the second AT;
   information on energy efficiency of the UE using the first AT and/or the second AT; or
   information on energy efficiency of a network corresponding to the first AT and/or the second AT.

In some embodiments, using, based on the multi-access related subscription data or the first multi-access related policy, the first AT and/or the second AT for communication includes:
in case of registering with a first network using the first AT and the second AT, using, based on the multi-access related subscription data or the first multi-access related policy, the first AT and/or the second AT for communication; or
in case of initiating registration with a first network using the second AT after registering with the first network using the first AT, using, based on the multi-access related subscription data or the first multi-access related policy, the first AT and/or the second AT for communication.

In some embodiments, using, based on the multi-access related subscription data or the first multi-access related policy, the first AT and/or the second AT for communication includes: performing one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a first application or service using the first AT to a connection using the second AT.

In some embodiments, before determining the multi-access related subscription data or the first multi-access related policy based on the access related information, the operations further include:
obtaining the access related information from a first network function entity.

In some embodiments, obtaining the access related information from the first network function entity includes:
transmitting a first message to the first network function entity, where the first message is used to request the access related information; and
receiving the access related information from the first network function entity;
where the first message and/or the access related information carries first description information on the UE using the first AT and/or the second AT, and the first description information includes one or more of following:
   an AT type;
   frequency information;
   a slice identifier;
   a data network identifier;
   a session identifier;
   an application identifier;
   UE location information;
   second time information, used to indicate applicable time of the access related information;
   second area information, used to indicate an applicable area of the access related information;
   information on a second energy consumption threshold, used to instruct the first network function entity, in case that the UE using the first AT and/or the second AT reaches or exceeds the second energy consumption threshold, to report the access related information; or
   information on a second energy efficiency threshold, used to instruct the first network function entity, in case that the UE using the first AT and/or the second AT reaches or falls below the second energy efficiency threshold, to report the access related information.

In some embodiments, the information on energy consumption of the UE using the first AT and/or the second AT includes one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
   and/or,
where the information on energy efficiency of the UE using the first AT and/or the second AT includes one or more of following:
   information on energy efficiency of the UE using the first AT and/or the second AT to support a specific application or service;
   information on energy efficiency of the UE using the first AT and/or the second AT to support a session of a specific data network;
   information on energy efficiency of the UE using the first AT and/or the second AT to support a session of a specific network slice; or
   information on statistics or prediction of energy efficiency of the UE using the first AT and/or the second AT.

In some embodiments, the information on energy consumption of the network corresponding to the first AT and/or the second AT includes one or more of following:
information on current energy consumption of the network corresponding to the first AT and/or the second AT; or
information on statistics or prediction of energy consumption of the network corresponding to the first AT and/or the second AT,
   and/or,
where the information on energy efficiency of the network corresponding to the first AT and/or the second AT includes one or more of following:
   information on current energy efficiency of the network corresponding to the first AT and/or the second AT; or
   information on statistics or prediction of energy efficiency of the network corresponding to the first AT and/or the second AT.

In some embodiments, the multi-access related subscription data or the first multi-access related policy includes one or more of following:
information on multiple ATs allowed or prohibited to be simultaneously used;
information on a network slice allowing or prohibiting simultaneous use of multiple ATs for access;
information on a data network allowing or prohibiting simultaneous use of multiple ATs for access;
multiple ATs arranged by priority, in case that a high-priority AT is used, a connection corresponding to a low-priority AT is released;
a policy for transmission of applications or services over connections or sessions corresponding to different ATs in case that multiple ATs are simultaneously used;
a first timer, used to indicate that in case that successfully registering with a first network or successfully establishing a session via the second AT exceeds a duration of the first timer, a connection or session corresponding to the first AT is released or modified.
first time information, used to indicate application of one or more of above policies within a time range specified by the first time information;
first area information, used to indicate application of one or more of above policies within an area specified by the first area information;
information on a first energy consumption threshold, used to indicate that in case that the UE using the first AT and/or the second AT reaches or exceeds the first energy consumption threshold, one or more of above policies are applied;
information on a first energy efficiency threshold, used to indicate that in case that the UE using the first AT and/or the second AT reaches or falls below the first energy efficiency threshold, one or more of above policies are applied.

In some embodiments, determining the multi-access related subscription data or the first multi-access related policy further includes:
obtaining the multi-access related subscription data or the first multi-access related policy from a second network function entity.

In a fourth aspect, an embodiment of the present application provides a network device, including a memory, a transceiver, and a processor,
where the memory is used for storing a computer program, the transceiver is used for transmitting and receiving data under control of the processor, and the processor is used for reading the computer program in the memory and performing following operations:
determining multi-access related subscription data or a first multi-access related policy, where the multi-access related subscription data or the first multi-access related policy is used to control a user equipment (UE) to use a first access technology (AT) and/or a second AT for communication; and
controlling, based on the multi-access related subscription data or the first multi-access related policy, the UE to use the first AT and/or the second AT for communication;
where determining the multi-access related subscription data or the first multi-access related policy includes:
   determining the multi-access related subscription data or the first multi-access related policy based on access related information, where the access related information includes one or a combination of following:
   information on energy consumption of the UE using the first AT and/or the second AT;
   information on energy consumption of a network corresponding to the first AT and/or the second AT;
   information on energy efficiency of the UE using the first AT and/or the second AT; or
   information on energy efficiency of a network corresponding to the first AT and/or the second AT.

In some embodiments, controlling, based on the multi-access related subscription data or the first multi-access related policy, the UE to use the first AT and/or the second AT for communication includes:
in case that the UE registers with a first network using the first AT and the second AT, controlling, based on the multi-access related subscription data or the first multi-access related policy, the UE to use the first AT and/or the second AT for communication; or
in case that the UE initiates registration with a first network using the second AT after registering with the first network using the first AT, controlling, based on the multi-access related subscription data or the first multi-access related policy, the UE to use the first AT and/or the second AT for communication.

In some embodiments, controlling, based on the multi-access related subscription data or the first multi-access related policy, the UE to use the first AT and/or the second AT for communication includes:
transmitting the multi-access related subscription data or the first multi-access related policy to the UE.

In some embodiments, controlling, based on the multi-access related subscription data or the first multi-access related policy, the UE to use the first AT and/or the second AT for communication includes:
controlling the UE to perform one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

In some embodiments, before determining the multi-access related subscription data or the first multi-access related policy based on the access related information, the operations further include:
obtaining the access related information from a first network function entity.

In some embodiments, obtaining the access related information from the first network function entity includes:
transmitting a first message to the first network function entity, where the first message is used to request the access related information; and
receiving the access related information from the first network function entity;
where the first message and/or the access related information carries first description information on the UE using the first AT and/or the second AT, and the first description information includes one or more of following:
   an AT type;
   frequency information;
   a slice identifier;
   a data network identifier;
   a session identifier;
   an application identifier;
   UE location information;
   second time information, used to indicate applicable time of the access related information;
   second area information, used to indicate an applicable area of the access related information;
   information on a second energy consumption threshold, used to instruct the first network function entity, in case that the UE using the first AT and/or the second AT reaches or exceeds the second energy consumption threshold, to report the access related information; or
   information on a second energy efficiency threshold, used to instruct the first network function entity, in case that the UE using the first AT and/or the second AT reaches or falls below the second energy efficiency threshold, to report the access related information.

In some embodiments, the information on energy consumption of the UE using the first AT and/or the second AT includes one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
   and/or,
where the information on energy efficiency of the UE using the first AT and/or the second AT includes one or more of following:
   information on energy efficiency of the UE using the first AT and/or the second AT to support a specific application or service;
   information on energy efficiency of the UE using the first AT and/or the second AT to support a session of a specific data network;
   information on energy efficiency of the UE using the first AT and/or the second AT to support a session of a specific network slice; or
   information on statistics or prediction of energy efficiency of the UE using the first AT and/or the second AT.

In some embodiments, the information on energy consumption of the network corresponding to the first AT and/or the second AT includes one or more of following:
information on current energy consumption of the network corresponding to the first AT and/or the second AT; or information on statistics or prediction of energy consumption of the network corresponding to the first AT and/or the second AT,
   and/or,
where the information on energy efficiency of the network corresponding to the first AT and/or the second AT includes one or more of following:
   information on current energy efficiency of the network corresponding to the first AT and/or the second AT; or
   information on statistics or prediction of energy efficiency of the network corresponding to the first AT and/or the second AT.

In a fifth aspect, an embodiment of the present application provides a communication apparatus, including:
a first determination module, used for determining multi-access related subscription data or a first multi-access related policy, where the multi-access related subscription data or the first multi-access related policy is used to control a user equipment (UE) to use a first access technology (AT) and/or a second AT for communication; and
a communication module, used for using, based on the multi-access related subscription data or the first multi-access related policy, the first AT and/or the second AT for communication;
where determining the multi-access related subscription data or the first multi-access related policy includes:
   determining the multi-access related subscription data or the first multi-access related policy based on access related information, where the access related information includes one or a combination of following:
   information on energy consumption of the UE using the first AT and/or the second AT;
   information on energy consumption of a network corresponding to the first AT and/or the second AT;
   information on energy efficiency of the UE using the first AT and/or the second AT; or
   information on energy efficiency of a network corresponding to the first AT and/or the second AT.

In some embodiments, using, based on the multi-access related subscription data or the first multi-access related policy, the first AT and/or the second AT for communication includes:
in case of registering with a first network using the first AT and the second AT, using, based on the multi-access related subscription data or the first multi-access related policy, the first AT and/or
the second AT for communication; or
in case of initiating registration with a first network using the second AT after registering with the first network using the first AT, using, based on the multi-access related subscription data or the first multi-access related policy, the first AT and/or the second AT for communication.

In some embodiments, using, based on the multi-access related subscription data or the first multi-access related policy, the first AT and/or the second AT for communication includes: performing one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a first application or service using the first AT to a connection using the second AT.

In some embodiments, the communication apparatus further includes a first obtainment module,
where the first obtainment module is used for obtaining the access related information from a first network function entity.

In some embodiments, the first obtainment module includes a first transmission unit and a first reception unit,
the first transmission unit is used for transmitting a first message to the first network function entity, where the first message is used to request the access related information;
the first reception unit is used for receiving the access related information from the first network function entity;
where the first message and/or the access related information carries first description information on the UE using the first AT and/or the second AT, and the first description information includes one or more of following:
   an AT type;
   frequency information;
   a slice identifier;
   a data network identifier;
   a session identifier;
   an application identifier;
   UE location information;
   second time information, used to indicate applicable time of the access related information;
   second area information, used to indicate an applicable area of the access related information;
   information on a second energy consumption threshold, used to instruct the first network function entity, in case that the UE using the first AT and/or the second AT reaches or exceeds the second energy consumption threshold, to report the access related information; or
   information on a second energy efficiency threshold, used to instruct the first network function entity, in case that the UE using the first AT and/or the second AT reaches or falls below the second energy efficiency threshold, to report the access related information.

In some embodiments, the information on energy consumption of the UE using the first AT and/or the second AT includes one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
   and/or,
where the information on energy efficiency of the UE using the first AT and/or the second AT includes one or more of following:
   information on energy efficiency of the UE using the first AT and/or the second AT to support a specific application or service;
   information on energy efficiency of the UE using the first AT and/or the second AT to support a session of a specific data network;
   information on energy efficiency of the UE using the first AT and/or the second AT to support a session of a specific network slice; or
   information on statistics or prediction of energy efficiency of the UE using the first AT and/or the second AT.

In some embodiments, the information on energy consumption of the network corresponding to the first AT and/or the second AT includes one or more of following:
information on current energy consumption of the network corresponding to the first AT and/or the second AT; or
information on statistics or prediction of energy consumption of the network corresponding to the first AT and/or the second AT,
   and/or,
where the information on energy efficiency of the network corresponding to the first AT and/or the second AT includes one or more of following:
   information on current energy efficiency of the network corresponding to the first AT and/or the second AT; or
   information on statistics or prediction of energy efficiency of the network corresponding to the first AT and/or the second AT.

In some embodiments, the multi-access related subscription data or the first multi-access related policy includes one or more of following:
information on multiple ATs allowed or prohibited to be simultaneously used;
information on a network slice allowing or prohibiting simultaneous use of multiple ATs for access;
information on a data network allowing or prohibiting simultaneous use of multiple ATs for access;
multiple ATs arranged by priority, in case that a high-priority AT is used, a connection corresponding to a low-priority AT is released;
a policy for transmission of applications or services over connections or sessions corresponding to different ATs in case that multiple ATs are simultaneously used;
a first timer, used to indicate that in case that successfully registering with a first network or successfully establishing a session via the second AT exceeds a duration of the first timer, a connection or session corresponding to the first AT is released or modified.
first time information, used to indicate application of one or more of above policies within a time range specified by the first time information;
first area information, used to indicate application of one or more of above policies within an area specified by the first area information;
information on a first energy consumption threshold, used to indicate that in case that the UE using the first AT and/or the second AT reaches or exceeds the first energy consumption threshold, one or more of above policies are applied;
information on a first energy efficiency threshold, used to indicate that in case that the UE using the first AT and/or the second AT reaches or falls below the first energy efficiency threshold, one or more of above policies are applied.

In some embodiments, the first determination module further includes a second determination unit,
the second determination unit is used for obtaining the multi-access related subscription data or the first multi-access related policy from a second network function entity.

In a sixth aspect, an embodiment of the present application provides a communication apparatus, including:
a second determination module, used for determining multi-access related subscription data or a first multi-access related policy, where the multi-access related subscription data or the first multi-access related policy is used to control a user equipment (UE) to use a first access technology (AT) and/or a second AT for communication; and
a control module, used for controlling, based on the multi-access related subscription data or the first multi-access related policy, the UE to use the first AT and/or the second AT for communication;
where determining the multi-access related subscription data or the first multi-access related policy includes:
   determining the multi-access related subscription data or the first multi-access related policy based on access related information, where the access related information includes one or a combination of following:
   information on energy consumption of the UE using the first AT and/or the second AT;
   information on energy consumption of a network corresponding to the first AT and/or the second AT;
   information on energy efficiency of the UE using the first AT and/or the second AT; or
   information on energy efficiency of a network corresponding to the first AT and/or the second AT.

In some embodiments, controlling, based on the multi-access related subscription data or the first multi-access related policy, the UE to use the first AT and/or the second AT for communication includes:
in case that the UE registers with a first network using the first AT and the second AT, controlling,
based on the multi-access related subscription data or the first multi-access related policy, the UE to use the first AT and/or the second AT for communication; or
in case that the UE initiates registration with a first network using the second AT after registering with the first network using the first AT, controlling, based on the multi-access related subscription data or the first multi-access related policy, the UE to use the first AT and/or the second AT for communication.

In some embodiments, the control module includes a second transmission unit, the second transmission unit is used for transmitting the multi-access related subscription data or the first multi-access related policy to the UE.

In some embodiments, controlling, based on the multi-access related subscription data or the first multi-access related policy, the UE to use the first AT and/or the second AT for communication includes:
controlling the UE to perform one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

In some embodiments, the communication apparatus further includes a second obtainment module,
where the second obtainment module is used for obtaining the access related information from a first network function entity.

In some embodiments, the second obtainment module includes a third transmission unit and a second reception unit,
the third transmission unit is used for transmitting a first message to the first network function entity, where the first message is used to request the access related information;
the second reception unit is used for receiving the access related information from the first network function entity;
where the first message and/or the access related information carries first description information on the UE using the first AT and/or the second AT, and the first description information includes one or more of following:
   an AT type;
   frequency information;
   a slice identifier;
   a data network identifier;
   a session identifier;
   an application identifier;
   UE location information;
   second time information, used to indicate applicable time of the access related information;
   second area information, used to indicate an applicable area of the access related information;
   information on a second energy consumption threshold, used to instruct the first network function entity, in case that the UE using the first AT and/or the second AT reaches or exceeds the second energy consumption threshold, to report the access related information; or
   information on a second energy efficiency threshold, used to instruct the first network function entity, in case that the UE using the first AT and/or the second AT reaches or falls below the second energy efficiency threshold, to report the access related information.

In some embodiments, the information on energy consumption of the UE using the first AT and/or the second AT includes one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
   and/or,
where the information on energy efficiency of the UE using the first AT and/or the second AT includes one or more of following:
   information on energy efficiency of the UE using the first AT and/or the second AT to support a specific application or service;
   information on energy efficiency of the UE using the first AT and/or the second AT to support a session of a specific data network;
   information on energy efficiency of the UE using the first AT and/or the second AT to support a session of a specific network slice; or
   information on statistics or prediction of energy efficiency of the UE using the first AT and/or the second AT.

In some embodiments, the information on energy consumption of the network corresponding to the first AT and/or the second AT includes one or more of following:
information on current energy consumption of the network corresponding to the first AT and/or the second AT; or
information on statistics or prediction of energy consumption of the network corresponding to the first AT and/or the second AT,
   and/or,
where the information on energy efficiency of the network corresponding to the first AT and/or the second AT includes one or more of following:
   information on current energy efficiency of the network corresponding to the first AT and/or the second AT; or
   information on statistics or prediction of energy efficiency of the network corresponding to the first AT and/or the second AT.

In a seventh aspect, an embodiment of the present application further provides a non-transitory readable storage medium storing a computer program, where the computer program is used for causing a processor to execute the communication method described above with respect to the first aspect or the second aspect.

In an eighth aspect, an embodiment of the present application further provides a processor-readable storage medium storing a computer program, where the computer program is used for causing a processor to execute the communication method described above with respect to the first aspect or the second aspect.

In a ninth aspect, an embodiment of the present application further provides a computer-readable storage medium storing a computer program, where the computer program is used for causing a computer to execute the communication method described above with respect to the first aspect or the second aspect.

In a tenth aspect, an embodiment of the present application further provides a communication device storing a computer program, where the computer program is used for causing the communication device to execute the communication method described above with respect to the first aspect or the second aspect.

In an eleventh aspect, an embodiment of the present application further provides a chip product storing a computer program, where the computer program is used for causing the chip product to execute the communication method described above with respect to the first aspect or the second aspect.

In the communication method, apparatus, and storage medium provided according to the present application, the UE is controlled, through the multi-access related subscription data or first multi-access related policy, to use the first access technology (AT) and/or second AT for communication, reducing the impact of multi-access on the energy consumption of the network and/or the UE, and improving the energy efficiency and performance of the network and UE.

### BRIEF DESCRIPTION OF THE DRAWINGS

In order to clearly illustrate the solutions in the embodiments of the present application, the accompanying drawings used in the description of the embodiments are briefly introduced below. It should be noted that the drawings in the following description are only some embodiments of the present application. For those of ordinary skill in the art, other drawings may be obtained based on these drawings without creative effort.
FIG. 1 is a first schematic flow chart of a communication method according to an embodiment of the present application;
FIG. 2 is a second schematic flow chart of a communication method according to an embodiment of the present application;
FIG. 3 is a first schematic diagram of signaling interaction for multi-access control according to an embodiment of the present application;
FIG. 4 is a second schematic diagram of signaling interaction for multi-access control according to an embodiment of the present application;
FIG. 5 is a third schematic diagram of signaling interaction for multi-access control according to an embodiment of the present application;
FIG. 6 is a fourth schematic diagram of signaling interaction for multi-access control according to an embodiment of the present application;
FIG. 7 is a schematic diagram of signaling interaction for access related information analytics according to an embodiment of the present application;
FIG. 8 is a schematic structural diagram of a user equipment (UE) according to an embodiment of the present application;
FIG. 9 is a schematic structural diagram of a network device according to an embodiment of the present application;
FIG. 10 is a first schematic structural diagram of a communication apparatus according to an embodiment of the present application; and
FIG. 11 is a second schematic structural diagram of a communication apparatus according to an embodiment of the present application.

### DETAILED DESCRIPTION

A wireless mobile communication system may support a user equipment (UE) to establish multi-access connections with the network via various access technologies (ATs), and use these ATs to establish (single-access) protocol data unit (PDU) sessions or multi-access PDU sessions.

The access technologies (ATs) include: terrestrial 3rd generation partnership project (3GPP) access technologies (such as new radio (NR), evolved universal terrestrial radio access (E-UTRA), universal terrestrial radio access (UTRA), and NR reduced capability (RedCap)), satellite (non-terrestrial) 3GPP access technologies (such as NR (low earth orbit (LEO)), NR (medium earth orbit (MEO)), NR (geostationary earth orbit (GEO)), NR (OTHERSAT)); and non-3GPP access technologies (such as trusted wireless local area network (WLAN) access, untrusted WLAN access, etc.).

The (single-access) PDU sessions refer to PDU sessions that use only one AT to transmit data, while the multi-access PDU sessions have access branches established via different ATs and may use different ATs to transmit data.

The UE may establish dual connections using one terrestrial 3GPP access technology (e.g., NR) and one satellite (non-terrestrial) 3GPP access technology (e.g., NR (LEO)), establish one or more (single-access) PDU sessions on NR, and simultaneously establish one or more multi-access PDU sessions using both NR and NR (LEO). In another embodiment, the UE may establish dual connections using two terrestrial 3GPP access technologies (e.g., NR and E-UTRA), or using one terrestrial 3GPP access technology (e.g., NR) and one non-3GPP access technology (e.g., trusted WLAN access).

Terms "multi-access" and "multi-connection" herein both refer to scenarios where the UE registers with the network via multiple ATs.

Energy consumption of a communication device refers to the energy consumed by the communication device to support communication operations and complete communication tasks. The energy consumption may be calculated by measuring the power of the device over a period of time. The energy consumption of an entire communication system is the sum of the energy consumption of all communication devices in the system. Energy efficiency of the communication device/communication system reflects the efficiency of energy consumption, and may be defined as the ratio of the amount of the transmitted data to the energy consumption, or the ratio of the coverage/service area to the energy consumption. The energy efficiency may be applied to the entire network, subnets (e.g., wireless access networks, an individual network device, communication sites (e.g., data centers), terminals, etc.

In 5G (5th generation mobile communication) networks, by transmitting a policy or rule (e.g., UE routing selection policy (URSP), access traffic steering switching splitting (ATSSS) rule) for transmission of application/service data over (single-access) PDU sessions and/or multi-access PDU sessions to a UE, the UE may be guided to select which one or more access technologies to transmit the application/service data. However, factors of the UE or the network, such as the energy consumption and efficiency, are not considered in current policies and rules.

When the UE uses multi-access to be simultaneously connected to the network and/or to transmit data, the energy consumption of the network and UE is increased. In UE multi-access scenarios, existing technologies fail to provide effective solutions to reduce the energy consumption of the network and UE or improve the energy efficiency. For example, when the UE establishes multi-access connections and sessions using different access technologies (ATs), how should the network or UE make decisions (e.g., release or modification) regarding existing connections and/or sessions to reduce the energy consumption of the network or UE?

Based on the above-mentioned technical problems, embodiments of the present application provide a communication method, apparatus, and storage medium, which may control, through the multi-access related subscription data or first multi-access related policy, the UE to use the first access technology (AT) and/or second AT for communication, reducing the impact of multi-access on the energy consumption of the network and/or the UE, and improving the energy efficiency and performance of the network and UE.

To make the objectives, solutions, and advantages of embodiments of the present application more clear, the solutions of the embodiments of the present application will be clearly and completely described below in conjunction with the accompanying drawings in the embodiments. Obviously, the embodiments described are only part of the embodiments of the present application, not all of them. All other embodiments obtained by those skilled in the art based on the embodiments of the present application without creative effort shall fall within the scope of protection of the present application.

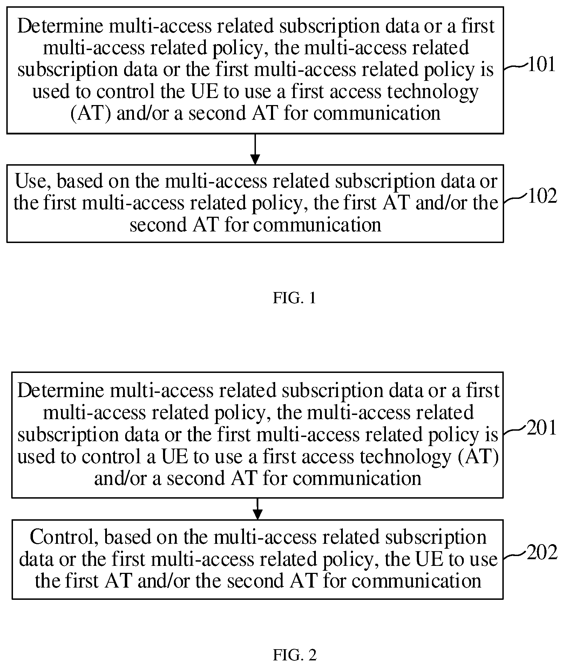

FIG. 1 is a first flow chart of a communication method according to an embodiment of the present application. As shown in FIG. 1, an embodiment of the present application provides a communication method, which is performed by a user equipment (UE), such as a mobile phone. The method includes:

Step 101: determine multi-access related subscription data or a first multi-access related policy, where the multi-access related subscription data or the first multi-access related policy is used to control the user equipment (UE) to use a first access technology (AT) and/or a second AT for communication.

In an embodiment of the present application, when the UE initiates the establishment of multi-access connections via different access technologies (e.g., including a first AT and/or a second AT), the UE restricts and uses multi-access based on multi-access related policies or multi-access related subscription data transmitted by the network or determined by the UE itself.

In some embodiments, the multi-access related subscription data or the first multi-access related policy includes one or more of following:
information on multiple ATs allowed or prohibited to be simultaneously used;
information on a network slice allowing or prohibiting simultaneous use of multiple ATs for access;
information on a data network allowing or prohibiting simultaneous use of multiple ATs for access;
multiple ATs arranged by priority, in case that a high-priority AT is used, a connection corresponding to a low-priority AT is released;
a policy for transmission of applications or services over connections or sessions corresponding to different ATs in case that multiple ATs are simultaneously used;
a first timer, used to indicate that in case that successfully registering with a first network or
successfully establishing a session via the second AT exceeds a duration of the first timer, a connection or session corresponding to the first AT is released or modified;
first time information, used to indicate application of one or more of above policies within a time range specified by the first time information;
first area information, used to indicate application of one or more of above policies within an area specified by the first area information;
information on a first energy consumption threshold, used to indicate that in case that the UE using the first AT and/or the second AT reaches or exceeds the first energy consumption threshold, one or more of above policies are applied;
information on a first energy efficiency threshold, used to indicate that in case that the UE using the first AT and/or the second AT reaches or falls below the first energy efficiency threshold, one or more of above policies are applied.

Step 102: use, based on the multi-access related subscription data or the first multi-access related policy, the first AT and/or the second AT for communication.

In an embodiment of the present application, in case of registering with a first network using the first AT and the second AT, it is allowed to use, based on the multi-access related subscription data or the first multi-access related policy, the first AT and/or the second AT for communication.

In another embodiment of the present application, in case of initiating registration with a first network using the second AT after registering with the first network using the first AT, it is allowed to use, based on the multi-access related subscription data or the first multi-access related policy, the first AT and/or the second AT for communication.

In some embodiments, using, based on the multi-access related subscription data or the first multi-access related policy, the first AT and/or the second AT for communication includes: performing one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

In the communication method provided according to embodiments of the present application, the UE is controlled, through the multi-access related subscription data or first multi-access related policy, to use the first access technology (AT) and/or second AT for communication, reducing the impact of multi-access on the energy consumption of the network and/or the UE, and improving the energy efficiency and performance of the network and UE.

In some embodiments, determining the multi-access related subscription data or the first multi-access related policy includes:
determining the multi-access related subscription data or the first multi-access related policy based on access related information, where the access related information includes one or a combination of following:
information on energy consumption of the UE using the first AT and/or the second AT;
information on energy consumption of a network corresponding to the first AT and/or the second AT;
information on energy efficiency of the UE using the first AT and/or the second AT; or
information on energy efficiency of a network corresponding to the first AT and/or the second AT.

In an embodiment of the present application, the UE may determine the multi-access related subscription data or the first multi-access related policy based on access related information.

The access related information includes one or a combination of following:
information on energy consumption of the UE using the first AT and/or the second AT;
information on energy consumption of a network corresponding to the first AT and/or the second AT;
information on energy efficiency of the UE using the first AT and/or the second AT; or
information on energy efficiency of a network corresponding to the first AT and/or the second AT.

In some embodiments, the information on energy consumption of the UE using the first AT and/or the second AT includes one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
   and/or,
where the information on energy efficiency of the UE using the first AT and/or the second AT includes one or more of following:
   information on energy efficiency of the UE using the first AT and/or the second AT to support a specific application or service;
   information on energy efficiency of the UE using the first AT and/or the second AT to support a session of a specific data network;
   information on energy efficiency of the UE using the first AT and/or the second AT to support a session of a specific network slice; or
   information on statistics or prediction of energy efficiency of the UE using the first AT and/or the second AT.

In some embodiments, before the UE determines the multi-access related subscription data or the first multi-access related policy based on the access related information, the method further includes:
obtaining the access related information from a first network function entity.

In an embodiment of the present application, the first network function entity may be a radio access network (RAN), access and mobility management function (AMF), session management function (SMF), unified data management (UDM), unified data repository (UDR), policy control function (PCF), network exposure function (NEF), application function (AF), network data analytics function (NWDAF), etc.

In some embodiments, obtaining the access related information from the first network function entity includes:
transmitting a first message to the first network function entity, where the first message is used to request the access related information; and
receiving the access related information from the first network function entity;
where the first message and/or the access related information carries first description information on the UE using the first AT and/or the second AT, and the first description information includes one or more of following:
   an AT type;
   frequency information;
   a slice identifier;
   a data network identifier;
   a session identifier;
   an application identifier;
   UE location information;
   second time information, used to indicate applicable time of the access related information;
   second area information, used to indicate an applicable area of the access related information;
   information on a second energy consumption threshold, used to instruct the first network function entity, in case that the UE using the first AT and/or the second AT reaches or exceeds the second energy consumption threshold, to report the access related information; or
   information on a second energy efficiency threshold, used to instruct the first network function entity, in case that the UE using the first AT and/or the second AT reaches or falls below the second energy efficiency threshold, to report the access related information.

In the communication method provided according to embodiments of the present application, the UE obtains the access related information from the first network function entity and determines the multi-access related subscription data or the first multi-access related policy based on the access related information, reducing the amount of calculation of the network device and further reducing the energy consumption of the network device.

In some embodiments, determining the multi-access related subscription data or the first multi-access related policy further includes:
obtaining the multi-access related subscription data or the first multi-access related policy from a second network function entity.

In an embodiment of the present application, the UE may obtain the multi-access related subscription data or the first multi-access related policy from a second network function entity.

The second network function entity may be a RAN, AMF, SMF, UDM, UDR, PCF, NEF, AF, NWDAF, etc.

In the communication method provided according to embodiments of the present application, the UE obtains the multi-access related subscription data or the first multi-access related policy from the second network function entity, reducing the amount of calculation of the UE and further reducing the energy consumption of the UE.

FIG. 2 is a second flow chart of a communication method according to an embodiment of the present application. As shown in FIG. 2, an embodiment of the present application provides a communication method, which may be performed by a network device, such as a RAN, AMF, SMF, UDM, UDR, PCF, NEF, AF, NWDAF, etc. The method includes:

Step 201: determine multi-access related subscription data or a first multi-access related policy, where the multi-access related subscription data or the first multi-access related policy is used to control a user equipment (UE) to use a first access technology (AT) and/or a second AT for communication.

In some embodiments, determining the multi-access related subscription data or the first multi-access related policy includes:
determining the multi-access related subscription data or the first multi-access related policy based on access related information, where the access related information includes one or a combination of following:
information on energy consumption of the UE using the first AT and/or the second AT;
information on energy consumption of a network corresponding to the first AT and/or the second AT;
information on energy efficiency of the UE using the first AT and/or the second AT; or
information on energy efficiency of a network corresponding to the first AT and/or the second AT.

In an embodiment of the present application, the network device may determine the multi-access related subscription data or the first multi-access related policy based on access related information.

The access related information includes one or a combination of following:
information on energy consumption of the UE using the first AT and/or the second AT;
information on energy consumption of a network corresponding to the first AT and/or the second AT;
information on energy efficiency of the UE using the first AT and/or the second AT; or
information on energy efficiency of a network corresponding to the first AT and/or the second AT.

In some embodiments, the information on energy consumption of the UE using the first AT and/or the second AT includes one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
   and/or,
where the information on energy efficiency of the UE using the first AT and/or the second AT includes one or more of following:
   information on energy efficiency of the UE using the first AT and/or the second AT to support a specific application or service;
   information on energy efficiency of the UE using the first AT and/or the second AT to support a session of a specific data network;
   information on energy efficiency of the UE using the first AT and/or the second AT to support a session of a specific network slice; or
   information on statistics or prediction of energy efficiency of the UE using the first AT and/or the second AT.

In some embodiments, before the network device determines the multi-access related subscription data or the first multi-access related policy based on the access related information, the method further includes:
obtaining the access related information from a first network function entity.

In an embodiment of the present application, the first network function entity may be a RAN, AMF, SMF, UDM, UDR, PCF, NEF, AF, NWDAF, etc.

In some embodiments, obtaining the access related information from the first network function entity includes:
transmitting a first message to the first network function entity, where the first message is used to request the access related information; and
receiving the access related information from the first network function entity;
where the first message and/or the access related information carries first description information on the UE using the first AT and/or the second AT, and the first description information includes one or more of following:
   an AT type;
   frequency information;
   a slice identifier;
   a data network identifier;
   a session identifier;
   an application identifier;
   UE location information;
   second time information, used to indicate applicable time of the access related information;
   second area information, used to indicate an applicable area of the access related information;
   information on a second energy consumption threshold, used to instruct the first network function entity, in case that the UE using the first AT and/or the second AT reaches or exceeds the second energy consumption threshold, to report the access related information; or
   information on a second energy efficiency threshold, used to instruct the first network function entity, in case that the UE using the first AT and/or the second AT reaches or falls below the second energy efficiency threshold, to report the access related information.

Step 202: control, based on the multi-access related subscription data or the first multi-access related policy, the UE to use the first AT and/or the second AT for communication.

In an embodiment of the present application, in case that the UE registers with a first network using the first AT and the second AT, it is allowed to control, based on the multi-access related subscription data or the first multi-access related policy, the UE to use the first AT and/or the second AT for communication.

In another embodiment of the present application, in case that the UE initiates registration with a first network using the second AT after registering with the first network using the first AT, it is allowed to control, based on the multi-access related subscription data or the first multi-access related policy, the UE to use the first AT and/or the second AT for communication.

In some embodiments, controlling, based on the multi-access related subscription data or the first multi-access related policy, the UE to use the first AT and/or the second AT for communication includes:
transmitting the multi-access related subscription data or the first multi-access related policy to the UE.

In an embodiment of the present application, the network device transmits the multi-access related subscription data or the first multi-access related policy to the UE.

The UE uses the first AT and/or the second AT for communication, based on the multi-access related subscription data or the first multi-access related policy.

In some embodiments, controlling, based on the multi-access related subscription data or the first multi-access related policy, the UE to use the first AT and/or the second AT for communication includes:
controlling the UE to perform one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

In the communication method provided according to embodiments of the present application, the UE is controlled, through the multi-access related subscription data or first multi-access related policy, to use the first access technology (AT) and/or second AT for communication, reducing the impact of multi-access on the energy consumption of the network and/or the UE, and improving the energy efficiency and performance of the network and UE.

The methods described in the above embodiments will be further illustrated below with several specific examples.

### Example 1

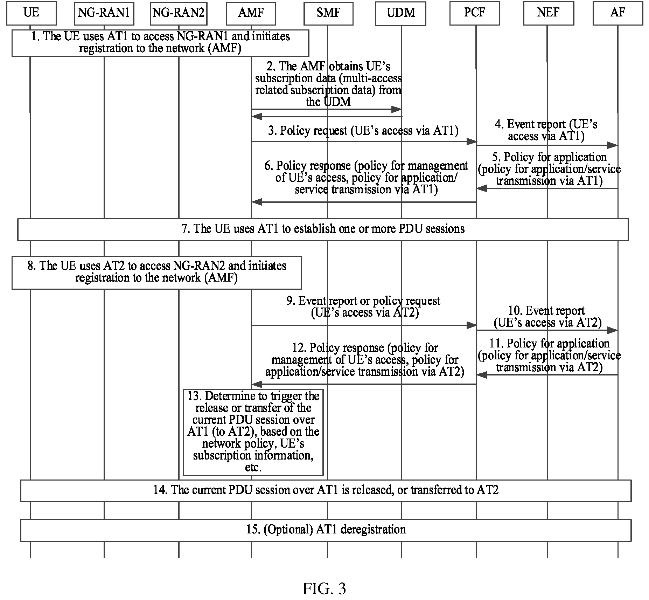

FIG. 3 is a first schematic diagram of signaling interaction for multi-access control according to an embodiment of the present application. As shown in FIG. 3, the multi-access control may include following steps.
1. The UE uses the first access technology (AT1) to access NG-RAN1 and initiates registration to the network (e.g., AMF). The registration request carries an indication of the UE's capability to support multi-access. The AMF processes and accepts the UE's registration request. For details of the multi-access related procedures, please refer to steps 2-6.
2. The AMF obtains subscription data from the UDM, and the subscription data includes UE multi-access related subscription information.

In an embodiment, for the UE/user, the UE multi-access related subscription information includes one or a combination of following:
(1) multiple ATs allowed to be simultaneously used by the UE (which may be indicated by an AT type);
(2) a network slice allowing use of multi-access (which may be indicated by single network slice selection assistance information (S-NSSAI)); or
(3) a data network allowing use of multi-access (which may be indicated by the data network name (DNN)), such as a specific local access data network (LADN).

3. The AMF transmits a policy request or event report to the PCF, which carries information on the UE's access/registration via AT1 and information indicating that the UE supports multi-access.

4. The PCF transmits an event report to the AF, which carries information on the UE's access/registration via AT1 and information indicating that the UE supports multi-access.

5. The AF replies to the PCF with the policy for application/service transmission via multi-access, i.e., the policy for application/service transmission via AT1. For a specific application/service, the policy for application/service transmission via multi-access includes one or a combination of following:
(1) multiple ATs allowed or prohibited to be simultaneously used by the UE (which may be indicated by an AT type);
(2) a network slice allowing or prohibiting use of multi-access transmission (which may be indicated by single network slice selection assistance information (S-NSSAI)); and/or
(3) a data network allowing or prohibiting use of multi-access transmission (which may be indicated by the data network name (DNN), or the data network access identifier (DNAI)).

6. The PCF replies to the AMF with the UE multi-access related policy, that is, it replies to the AMF with the policy for application/service transmission via AT1. In an embodiment, the UE multi-access related policy may contain one or a combination of following:
(1) multiple ATs that cannot be simultaneously used by the UE;
(2) release of AT1 (e.g., satellite access technology) in case that other AT connections exist;
(3) ATs arranged by priority; in case that the UE uses a high-priority AT for access, the access via a low-priority AT is released;
(4) multiple ATs that may be simultaneously used by the UE;
(5) the policy for application/service transmission via multi-access; see step 5 for details; the PCF may determine the policy based on the information provided by the AF (see steps 4-5) or the PCF's local policy;
(6) timer1, used to indicate that the network releases or modifies the PDU session (or branch of multi-access PDU sessions) via AT1 and/or releases the connection via AT1 only when the UE subsequently successfully accesses the network via other ATs (e.g., AT2) for more than the duration of the timer1 (e.g., 2 minutes); or
(7) information on a time period or area, which is used to indicate that, only within the specified time period or area, the PDU session (or branch of multi-access PDU sessions) via AT1 will be released or modified, and/or the connection via AT1 will be released.

7. The UE establishes one or more PDU sessions (or a branch of multi-access PDU sessions) via AT1.

8. The UE uses the second access technology (AT2) to access NG-RAN2 and initiates a registration request to the network (e.g., AMF). The UE provides the globally unique AMF identifier (GUAMI) of the AMF in step 1 to the NG-RAN2 (e.g., the parameter is carried in the RRC Setup Complete message), and the NG-RAN2 selects the AMF based on the GUAMI. That is, the management (including registration, service requests, etc.) of UE's access via AT1 and AT2 is performed by the same AMF.

The AMF determines whether to accept the UE's registration request via AT2 based on the UE's subscription data. For example, in case that the network slice requested by the UE to access allows the UE to use multi-access, the AMF accepts the UE's registration request via AT2.

9. The AMF transmits a policy request or event report to the PCF, which carries information on the UE's access/registration via AT2 and information indicating that the UE supports multi-access.

10. The PCF transmits an event report to the AF, which carries information on the UE's access/registration via AT2 and information indicating that the UE supports multi-access.

11. The AF replies to the PCF with the policy for application/service transmission via multi-access, i.e., the policy for application/service transmission via AT2.

12. The PCF replies to the AMF with the UE multi-access related policy, that is, it replies to the AMF with the policy for application/service transmission via AT2.

13. The AMF determines to release or modify the PDU session (or branch of multi-access PDU sessions) established by the UE using AT1, based on the policy provided by the PCF or the AMF's local policy.

In an embodiment, the network function entity (NF) (e.g., PCF, AMF, SMF, AF) may determine the multi-access related network policy or subscription information based on the energy-saving requirement or energy consumption/energy efficiency of the network via different ATs. This includes dynamically adjusting the above network policy or subscription information based on the information on current energy consumption/energy efficiency of the network or UE via different ATs, the information on statistics of past energy consumption/energy efficiency of the network or UE via different ATs, and/or the information on prediction of future energy consumption/energy efficiency of the network or UE via different ATs. In an embodiment, this may include one of following ways:
(1) the NF (e.g., PCF, AMF, SMF, AF, or network energy consumption and efficiency management function (NEMF)) obtains the analytics information on energy consumption/energy efficiency of the network via one or more ATs (including information on statistics or prediction) from the NWDAF. The NEMF may determine the information on energy consumption/energy efficiency of the network via one or more ATs based on the analytics information and/or the network configuration;
(2) the NF (e.g., PCF, AMF, SMF, AF) determines the above multi-access related policy based on the above analytics information, or based on the information on energy consumption/energy efficiency of the network via one or more ATs provided by the NEMF.

For example, in case that the network supporting a specific AT has (relatively) high energy consumption or (relatively) low energy efficiency, or in case that the network via a specific AT (e.g., satellite access network) has (relatively) high energy-saving requirement, the NF (e.g., PCF, AMF, SMF) may set, in the multi-access related policy, the AT to be released, or set the AT to have a low priority, or use the AT to transmit the application/service with (relatively) low energy consumption.

14. The AMF (or PCF) triggers the SMF to transfer/switch (all or part of) sessions or QoS flows via AT1 to AT2. In another embodiment, the AMF (or PCF) triggers the UE to transfer/switch (all or part of) sessions or QoS flows via AT1 to AT2.

15. In another embodiment, in case that the connection via AT1 is to be released, the AMF initiates the AT1 deregistration procedure to the UE, or the UE initiates the AT1 deregistration procedure.

### Example 2

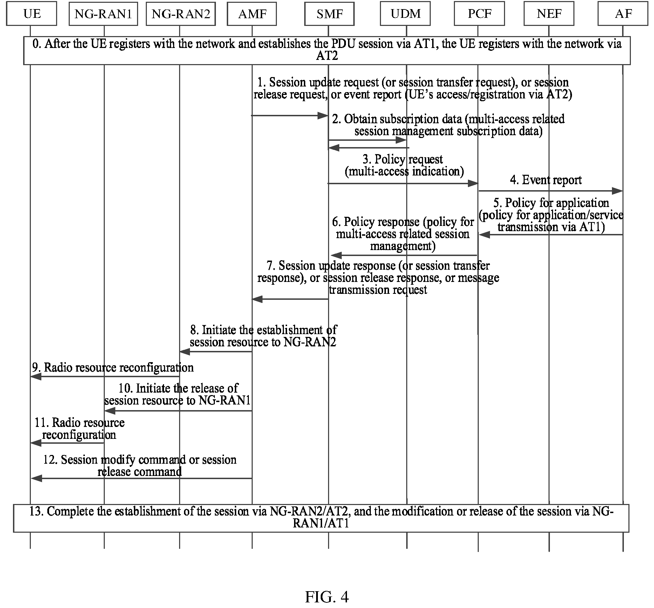

FIG. 4 is a second schematic diagram of signaling interaction for multi-access control according to an embodiment of the present application. As shown in FIG. 4, the multi-access control may include following steps.

0. The UE uses AT1 to access NG-RAN1 and initiates registration to the network (e.g., AMF). The AMF processes and accepts the UE's registration request. The UE establishes one or more PDU sessions (or a branch of multi-access PDU sessions) via AT1. Subsequently, the UE uses AT2 to access NG-RAN2 and initiates registration to the network (e.g., AMF).
1. The AMF transmits an event notification to the SMF, which carries information on the UE's access or registration via AT2.

In another embodiment, in case that the AMF determines, based on the multi-access related policy provided by the PCF or the AMF's local multi-access related policy, to trigger the release or modification of the PDU session (or branch of multi-access PDU sessions) established by the UE using AT1, then:
in case that the AMF determines to trigger the release of the PDU session (or branch of multi-access PDU sessions) established by the UE using AT1, the AMF initiates a session release request (or multi-access PDU sessions modification request) to the SMF, which carries the identifier of the PDU session to be released;
in case that the AMF determines to trigger the modification of the PDU session (or branch of multi-access PDU sessions) established by the UE using AT1, the AMF initiates a session update request or session transfer request to the SMF, which carries the identifier of the PDU session to be modified and the source access type (i.e., AT1); in case that the AMF determines to trigger the transfer of all or part of the sessions or QoS flows (corresponding to a specific application/service) via AT1 to AT2, the request message further carries the target access type (i.e., AT2) and/or the information on the UE's access or registration via AT2.

2. The SMF obtains subscription data from the UDM, and the subscription data includes the UE multi-access related session management subscription information.

In an embodiment, for the UE/user, the UE multi-access related session management subscription information includes one or a combination of following:
(1) multiple ATs that may be simultaneously used (which may be indicated by an AT type);
(2) a network slice allowing use of multi-access (which may be indicated by single network slice selection assistance information (S-NSSAI)); or
(3) a data network allowing use of multi-access (which may be indicated by the data network name (DNN)).

3. The SMF transmits a policy request to the PCF, which carries the source access type (i.e., AT1), the target access type (i.e., AT2), and/or the information on the UE's access (or registration, or PDU session establishment/modification) via AT2.

4. In another embodiment, the PCF transmits an event report to the AF, which carries the information on the UE's access (or registration, or PDU session establishment/modification) via AT2.

5. In another embodiment (if step 4 is performed), the AF replies to the PCF with the policy for application/service transmission via multi-access. For a specific application/service, the policy for application/service transmission via multi-access includes one or a combination of following:
(1) multiple ATs allowed or prohibited to be simultaneously used by the UE (which may be indicated by an AT type);
(2) a network slice allowing or prohibiting use of multi-access transmission (which may be indicated by single network slice selection assistance information (S-NSSAI)); and/or
(3) a data network allowing or prohibiting use of multi-access transmission (which may be indicated by the data network name (DNN), or the data network access identifier (DNAI)).

6. The PCF replies to the SMF with the UE multi-access related session management policy. In an embodiment, the UE multi-access related session management policy may include following:
(1) multiple ATs that cannot be simultaneously used in case that the UE establishes a PDU session;
(2) release of the PDU session (or branch of multi-access PDU sessions) via AT1 (e.g., satellite access technology) in case that other AT connections exist;
(3) ATs arranged by priority; in case that the UE uses a high-priority AT for access, the PDU session (or branch of multi-access PDU sessions) via the low-priority AT is released;
(4) multiple ATs that may be simultaneously used in case that the UE establishes a PDU session;
(5) the policy for application/service transmission via multi-access. See step 5. The PCF may determine the policy based on the information provided by the AF (see steps 4-5) or the PCF's local policy;
(6) timer1, used to indicate that the network releases or modifies the PDU session (or branch of multi-access PDU sessions) via AT1 only when the UE subsequently successfully accesses the network via other ATs (e.g., AT2) for more than the duration of the timer1 (e.g., 2 minutes). (Note: The SMF may determine whether this condition is met based on the event notification received from the AMF regarding the UE's access/registration via AT1 and other ATs.);
(7) information on a time period or area, which is used to indicate that, only within the specified time period or area, the PDU session (or branch of multi-access PDU sessions) via AT1 will be released or modified.

7. The SMF determines, based on the multi-access related session management policy provided by the PCF, or the SMF's local multi-access related session management policy, to release or modify the PDU session established by the UE using AT1, and/or transfer all or part of sessions or applications/services via AT1 to AT2. The SMF transmits a message transmission request to the AMF, including following situations:
(1) in case that the SMF determines to release the PDU session (or branch of multi-access PDU sessions) established by the UE using AT1, the request carries the PDU session resource release information (or multi-access PDU sessions resource modification information) sent to NG-RAN1 and the PDU session release command (or multi-access PDU sessions modification command) sent to the UE;
(2) in case that the SMF determines to transfer the PDU session (or all QoS flows of the branch of multi-access PDU sessions) via AT1 to AT2, the request carries the PDU session resource release information (or multi-access PDU sessions resource modification information) sent to NG-RAN1 and the PDU session resource establishment information (or multi-access PDU sessions resource modification information) sent to NG-RAN2;
(3) in case that the SMF determines to modify the PDU session (or branch of multi-access PDU sessions) established by the UE using AT1, and transfer some QoS flows (corresponding to a specific application/service) in the session to AT2, the request carries the PDU session resource modification information sent to NG-RAN1, the PDU session resource establishment information (or multi-access PDU sessions resource modification information) sent to NG-RAN2, and the PDU session modification command sent to the UE.

In another embodiment, if step 1 includes a session release request, the SMF transmits a session release response to the AMF, which carries the PDU session resource release information sent to NG-RAN1 and the PDU session release command sent to the UE.

If step 1 includes a session update request or a session transfer request, the SMF transmits a session update response or session transfer response to the AMF, which carries the PDU session resource modification information or PDU session resource release information (or multi-access PDU sessions resource modification information) sent to NG-RAN1, the PDU session resource establishment information (or multi-access PDU sessions resource modification information) sent to NG-RAN2, and the PDU session modification command sent to the UE.

8-13. Based on the message sent by the SMF, the AMF forwards the PDU session resource modification information or the PDU session resource release information to NG-RAN1, forwards the PDU session resource establishment information (or multi-access PDU sessions resource modification information) to NG-RAN2, and forwards the PDU session modification command or the PDU session release command to the UE through NG-RAN1 or NG-RAN2. NG -RAN1 and NG-RAN2 (if NG-RAN2 receives the PDU session resource establishment information (or multi-access PDU sessions resource modification information)) initiate radio resource reconfiguration to the UE. This completes the establishment of a session (or modification of a branch of multi-access PDU sessions) via NG-RAN2/AT2 and the modification or release of a session (or branch of multi-access PDU sessions) via NG-RAN1/AT1, transferring all or part of the sessions (or the branch of multi-access PDU sessions) or QoS flows via AT1 to AT2.

### Example 3

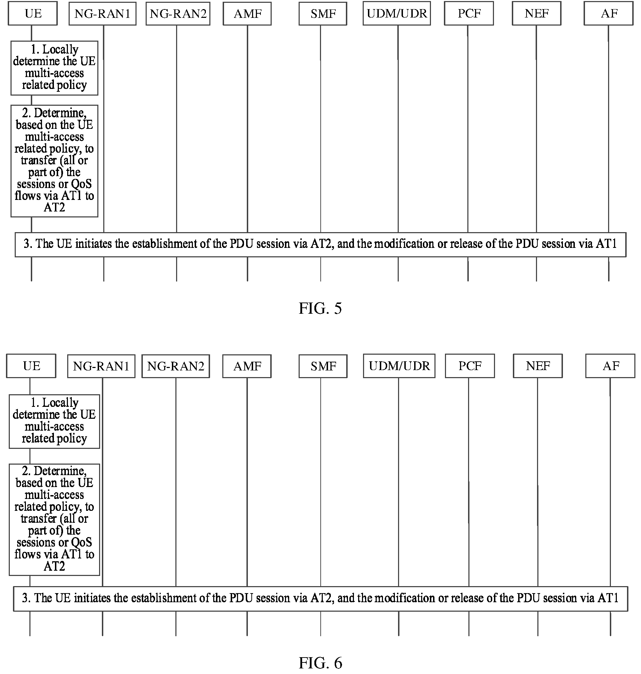

FIG. 5 is a third schematic diagram of signaling interaction for multi-access control according to an embodiment of the present application. As shown in FIG. 5, the multi-access control may include following steps.
1. The PCF decides to transmit or update the UE multi-access related policy to the UE under one or a combination of following conditions:
   (1) the UE requests the network for the UE multi-access related policy, and the request message carries the indication of UE multi-access capability and the AT type that the UE supports for simultaneous access (e.g., AT1, AT2). The AMF forwards the UE's request to the PCF;
   (2) the PCF receives, from the AMF, an event report/event notification regarding UE's registration, for example, UE's registration via AT1, UE's registration via AT2, and the PCF determines that the UE registers with the network via multiple ATs accordingly;
   (3) the PCF receives the policy (update) for the service/application transmission via a specific AT (e.g., AT1, AT2) sent by the AF, and determines to transmit or update the UE multi-access related policy accordingly;
   (4) the PCF receives the multi-access related subscription information (update) sent by the UDM/UDR, and determines to transmit or update the UE multi-access related policy accordingly. See Examples 1 and 2 for the multi-access related subscription information.

2-3. The PCF transmits/updates the UE multi-access related policy to the UE through the AMF. The AMF forwards the UE multi-access related policy to the UE.

In an embodiment, the UE multi-access related policy may include one or a combination of following:
(1) multiple ATs that cannot be simultaneously used by the UE;
(2) release of AT1 (e.g., satellite access technology) in case that other AT connections exist;
(3) ATs arranged by priority; in case that the UE uses a high-priority AT for access, the access via a low-priority AT is released;
(4) multiple ATs that may be simultaneously used by the UE;
(5) the policy for application/service transmission via multi-access. See Examples 1 and 2;
(6) timer1, used to indicate that the PDU session (or branch of multi-access PDU sessions) via AT1 is released or modified, and/or the connection via AT1 is released, only when the UE successfully accesses the network via other ATs (e.g., AT2) for more than the duration of the timer1 (e.g., 2 minutes); or
(7) information on a time period or area, which is used to indicate that, only within the specified time period or area, the PDU session (or branch of multi-access PDU sessions) via AT1 will be released or modified, and/or the connection via AT1 will be released.

4. The UE receives the UE multi-access related policy. In case that the UE has already registered with the network via multi-access, such as AT1 and AT2, the UE determines, based on the UE multi-access related policy, to transfer all or part of the sessions or QoS flows via AT1 to AT2.

5. The UE initiates the establishment and/or modification of PDU sessions via AT2, and the modification or release of PDU sessions via AT1, transferring all or part of the sessions or QoS flows via AT1 (e.g., transferring PDU session 1 and QoS flow 1 of PDU session 2) to AT2.

### Example 4

FIG. 6 is a fourth schematic diagram of signaling interaction for multi-access control according to an embodiment of the present application. As shown in FIG. 6, the multi-access control may include following steps.
1. The UE locally determines the multi-access related policy. The policy may include one or a combination of following:
   (1) multiple ATs that cannot be simultaneously used by the UE;
   (2) release of AT1 (e.g., satellite access technology) in case that other AT connections exist;
   (3) ATs arranged by priority; in case that the UE uses a high-priority AT for access, the access via a low-priority AT is released;
   (4) multiple ATs that may be simultaneously used by the UE;
   (5) for a specific application/service: multiple ATs allowed or prohibited to be simultaneously used; a network slice allowing or prohibiting use of multi-access transmission; and/or a data network allowing or prohibiting use of multi-access transmission;
   (6) in case that the UE uses AT1 and other ATs simultaneously, prioritize or prohibit the transmission of a specific application/service via AT1 and/or other ATs. For example: 1) prioritize the transmission of a voice application/service (which may be indicated by an application identifier or service type) via AT1, and prioritize the transmission of a data application/service via other ATs (e.g., AT2); 2) prohibit the transmission of a video application/service via AT1 (or other ATs);
   (7) timer2, used to indicate that the network releases or modifies the PDU session (or branch of multi-access PDU sessions) via AT1 and/or releases the connection via AT1 only when the UE subsequently successfully accesses the network via other ATs (e.g., AT2) for more than the duration of the timer2 (e.g., 3 minutes); or
   (8) information on a time period or area, which is used to indicate that, only within the specified time period or area, the PDU session (or branch of multi-access PDU sessions) via AT1 will be released or modified, and/or the connection via AT1 will be released.

The UE may determine the UE multi-access related policy based on the energy consumption/energy efficiency of the UE's access via a specific AT. In an embodiment, this includes: the UE may determine and dynamically adjust the policy based on the statistics of energy consumption/energy efficiency of the UE's previous access via a specific AT, and/or the prediction of energy consumption/energy efficiency of the UE's future access via a specific AT. See Example 5 for the method by which the UE obtains the statistics or prediction of energy consumption/energy efficiency of the UE via a specific AT.

2. In case that the UE has already registered with the network via multi-access, such as AT1 and AT2, the UE determines, based on the UE multi-access related policy, to transfer all or part of the sessions or QoS flows via AT1 to AT2.

3. The UE initiates the establishment and/or modification of PDU sessions via AT2, and the modification or release of PDU sessions via AT1, transferring all or part of the sessions or QoS flows via AT1 (e.g., transferring PDU session 1 and QoS flow 1 of PDU session 2) to AT2.

### Example 5

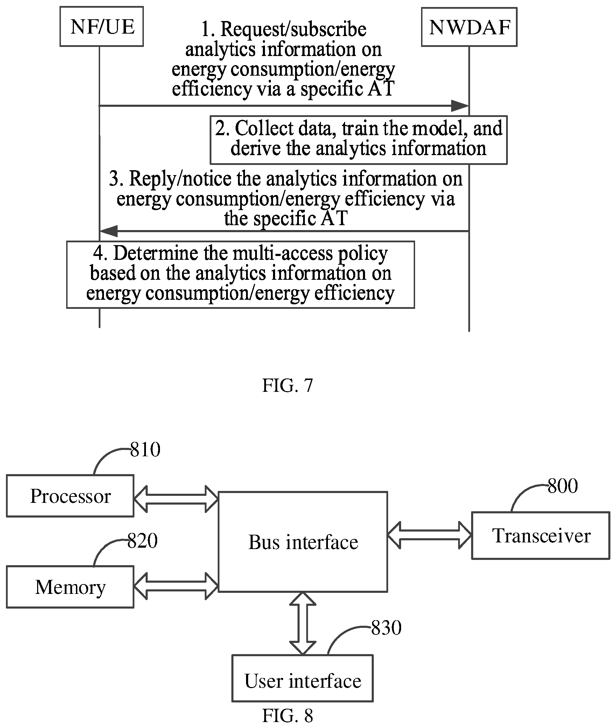

FIG. 7 is a schematic diagram of signaling interaction for access related information analytics according to an embodiment of the present application. As shown in FIG. 7, the flow for analyzing the access related information may include following steps.
1. The NF or UE transmits an analytics information request or subscription message to the NWDAF to request or subscribe to the analytics information on energy consumption/energy efficiency of the network or UE via a specific AT.

In an embodiment, the analytics information request or subscription message carries following parameters:
Analytics ID/type: indicates that the analytics related to energy efficiency or energy consumption is performed. For example: Analytics ID = Energy Efficiency, or Analytics ID = Energy Consumption;
Target of Analytics Report: one or more terminal identifiers (e.g., subscription permanent identifier (SUPI)), or terminal group identifier, or "any UE";
Analytics Filtering Information, as shown in Table 1. In an embodiment, the analytics filtering information includes an AT type, which is used to indicate the analytics information on energy consumption/energy efficiency of the network or UE requesting/subscribing to a specific AT;
Analytical Accuracy;
Target Analytics Time, indicating the time range for the requested statistical or predictive information;
Notification Associated Identifier and Target Address, which are used to subscribe to the analytics information;
Reporting Thresholds, which may be used for abnormality detection. For example, Reporting Thresholds = maximum energy consumption, maximum energy consumption ratio, or lowest energy efficiency. The maximum energy consumption or maximum energy consumption ratio may be used to instruct the NWDAF to report relevant analytics information when the statistics or prediction of energy consumption of the network or UE using a specific AT reaches or exceeds the threshold. The lowest energy efficiency may be used to instruct the NWDAF to report relevant analytics information when the statistics or prediction of energy efficiency of the network or UE using a specific AT reaches or falls below the threshold.

**Table 1 Analytics Filtering Information**

| Information | Description |
|---|---|
| AT Type | Radio access technology type, used to indicate the analytics of energy consumption/energy efficiency via a specified radio access technology. |
| Application ID (0...max) | Application identifier, used to indicate the analytics of energy consumption/energy efficiency of the network supporting a specified application. |
| S-NSSAI | Network slice identifier, used to indicate the analytics of energy consumption/energy efficiency of a specified network slice. |
| NSI ID(s) | Network slice instance identifier, used to indicate the analytics of energy consumption/energy efficiency of a specified network slice instance. |
| Area of Interest | Identifier of the area of interest, used to indicate the analytics of energy consumption/energy efficiency of a specified area. It may be represented by a tracking area identifier (TAI), cell ID, geographical area (e.g., an area identified by latitude and longitude), administrative area, etc. |
| Frequency | Frequency, used to indicate the analytics of energy consumption/energy efficiency at a specified frequency. |
| NF Type | Type of network function entity, such as access network (AN) (e.g., NG-RAN), AMF, SMF, UPF, used to indicate the analytics of energy consumption/energy efficiency of a specified type of network function entity. |
| NF ID | Identifier of network function entity, used to indicate the analytics of energy consumption/energy efficiency of a specified network function entity. |

2. Based on the analytics information request or subscription message, the NWDAF collects data related to the energy consumption/energy efficiency of the network or UE via a specific AT as input data to train the model for the energy consumption/energy efficiency of the network or UE via the specific AT, and derive the requested analytics information.

The NWDAF may collect relevant input data from the operations, administration and maintenance (OAM), network function entity (NF) (such as network energy management function (NEMF), access network (AN) (such as NG-RAN), AMF, SMF, UPF, etc.)), or the UE. In an embodiment, the types and description of the input data are shown in Table 2.

**Table 2 Types and description of input data**

| Data | Description |
|---|---|
| Timestamp | The time corresponding to/associated with following data |
| Radio access technology (AT) type | Following data is collected for a specific radio access technology. |
| Identification information | One or more of following identifiers: |
| | Slice identifier; slice instance identifier; NF identifier; UE identifier; service identifier; application identifier. |
| | Based on the above identifiers, following data refers to data for a specific slice, slice instance, NF, UE, service, or application using a specified radio access technology. |
| Number of UEs | Number of registered UEs (Note 1) |
| Number of PDU Sessions | Number of established PDU Sessions (Note 2) |
| Number of services or applications | Number of running services or applications (Note 3) |
| UE location | Information on the UE's current location, such as the cell, tracking area, or geographic location (e.g., latitude and longitude information) where the UE is located. |
| Resource usage information | For example, load information |
| Energy consumption information | For example, energy consumption, percentage in total energy consumption. |
| Renewable energy consumption information | For example, renewable energy consumption, percentage of renewable energy consumption in total energy consumption. |
| Information on average energy consumption per user/UE | For example, average energy consumption of each user/UE, percentage in total energy consumption (Note 1). |
| Information on average renewable energy consumption of each user/UE | For example, average renewable energy consumption of each user/UE, percentage of renewable energy consumption in total energy consumption (Note 1). |
| Information on average energy consumption of each PDU session | For example, average energy consumption of each PDU session, percentage in total energy consumption (Note 2). |
| Information on average renewable energy consumption of each PDU session | For example, average renewable energy consumption of each PDU session, percentage of renewable energy consumption in total energy consumption (Note 2). |
| Information on average energy consumption for each service/application | For example, average energy consumption for each service/application, percentage in total energy consumption (Note 3). |
| Information on average renewable energy consumption for each service/application | For example, average renewable energy consumption for each service/application, percentage of renewable energy consumption in total energy consumption (Note 3). |
| Information on energy consumption of a specified user/UE | For example, energy consumption of a specified user/UE, percentage in total energy consumption. |
| Information on renewable energy consumption of a specified user/UE | For example, renewable energy consumption of a specified user/UE, percentage of renewable energy consumption in total energy consumption. |
| Information on energy consumption of a specified PDU session | For example, energy consumption of a specified PDU session, percentage in total energy consumption. |
| Information on renewable energy consumption of a specified PDU session | For example, renewable energy consumption of a specified PDU session, percentage of renewable energy consumption in total energy consumption. |
| Information on energy consumption of a specified service/application | For example, energy consumption of a specified service/application, percentage in total energy consumption. |
| Information on renewable energy consumption of a specified service/application | For example, renewable energy consumption of a specified service/application, percentage of renewable energy consumption in total energy consumption. |
| Note 1: This item is not included if data is collected for one UE. | |
| Note 2: This item is not included if data is collected for one PDU session. | |
| Note 3: This item is not included if data is collected for one service/application. | |

The NWDAF uses the collected input data to train the model for the energy consumption/energy efficiency of the network or UE via a specific AT, and further derives the analytics information on the energy consumption/energy efficiency of the network or UE via the specific AT based on the trained model and input data.

In an embodiment, the derived analytics information on the energy consumption/energy efficiency of the network or UE via the specific AT is shown in Table 3. The analytics information may include: information on statistics of energy consumption/energy efficiency of the network or UE via the specific AT, and/or information on prediction of energy consumption/energy efficiency of the network or UE via the specific AT.

**Table 3 Output Analytics information**

| Information | Description |
|---|---|
| Timestamp | The time when following information is obtained |
| AT Type | Radio access technology type, used to indicate the analytics of energy consumption/energy efficiency via a specified radio access technology. |
| Frequency | Frequency, used to indicate the analytics of energy consumption/energy efficiency at a specified frequency. |
| NF ID | Network function identifier, indicating that following analytics information is for this NF. |
| S-NSSAI | Slice identifier, indicating that following analytics information is for this network slice. |
| Network slice instance (NSI) ID | Slice instance identifier, indicating that following analytics information is for this network slice instance. |
| UE ID | UE identifier, indicating that following analytics information is for this specific UE. |
| PDU session ID | PDU session identifier, indicating that following analytics information is for this specific PDU session. |
| Application ID | Application identifier, indicating that following analytics information is for this specific application. |
| UE location | Information on UE location |
| Resource usage information | For example, load information |
| Energy consumption information | For example, energy consumption, percentage in total energy consumption. |
| Renewable energy consumption information | For example, renewable energy consumption, percentage of renewable energy consumption in total energy consumption. |
| Information on average energy consumption of each user/UE | For example, average energy consumption of each user/UE, percentage in total energy consumption (Note 1). |
| Information on average renewable energy consumption of each user/UE | For example, average renewable energy consumption of each user/UE, percentage of renewable energy consumption in total energy consumption (Note 1). |
| Information on average energy consumption of each PDU session | For example, average energy consumption of each PDU session, percentage in total energy consumption (Note 1). |
| Information on average renewable energy consumption of each PDU session | For example, average renewable energy consumption of each PDU session, percentage in total energy consumption (Note 1). |
| Information on average energy consumption for each service/application | For example, average energy consumption for each service/application, percentage in total energy consumption (Note 3). |
| Information on average renewable energy consumption for each service/application | For example, average renewable energy consumption for each service/application, percentage of renewable energy consumption in total energy consumption (Note 3). |
| Confidence | This parameter is included only when the analytics information is predictive information. The confidence of the predictive information, i.e., the probability that the predictive information is accurate (or that the predicted event occurs), for example, 90%. |
| Note 1: This item is not included if the output analytics information is for one specified UE. | |
| Note 2: This item is not included if the output analytics information is for one specified PDU session. | |
| Note 3: This item is not included if the output analytics information is for one specified service/application. | |

3. The NWDAF transmits a reply or notification message to the NF or UE, which carries the analytics information on energy consumption/energy efficiency of the network or UE via a specific AT.

4. By (repeatedly) performing steps 1-3, the NF (e.g., AF, PCF) or UE obtains the analytics information on energy consumption/energy efficiency of the network or UE via different ATs (e.g., AT1, AT2) from the NWDAF. Based on the analytics information on energy consumption/energy efficiency of the network or UE via different ATs, the NF or UE determines the multi-access related policy (see Examples 1-4).

FIG. 8 is a schematic structural diagram of a user equipment (UE) according to an embodiment of the present application. As shown in FIG. 8, the UE includes a memory 820, a transceiver 800, and a processor 810.

The memory 820 is used for storing a computer program, the transceiver 800 is used for transmitting and receiving data under control of the processor 810, and the processor 810 is used for reading the computer program in the memory 820 and performing following operations:
determining multi-access related subscription data or a first multi-access related policy, where the multi-access related subscription data or the first multi-access related policy is used to control the UE to use a first access technology (AT) and/or a second AT for communication; and
using, based on the multi-access related subscription data or the first multi-access related policy, the first AT and/or the second AT for communication;
where determining the multi-access related subscription data or the first multi-access related policy includes:
   determining the multi-access related subscription data or the first multi-access related policy based on access related information, where the access related information includes one or a combination of following:
   information on energy consumption of the UE using the first AT and/or the second AT;
   information on energy consumption of a network corresponding to the first AT and/or the second AT;
   information on energy efficiency of the UE using the first AT and/or the second AT; or
   information on energy efficiency of a network corresponding to the first AT and/or the second AT.

In FIG. 8, the bus architecture may include any number of interconnected buses and bridges, which are connected together by various circuits such as one or more processors represented by the processor 810 and the memory represented by memory 820. The bus architecture may also connect various other circuits such as peripheral devices, voltage regulators, and power management circuits, which are well known in the art and are therefore not further described herein. The bus interface provides an interface. The transceiver 800 may be a plurality of components, including a transmitter and a receiver, providing a unit for communicating with various other devices on a transmission medium, such as a wireless channel, a wired channel, an optical cable, and the like. For different user devices, the user interface 830 may also be an interface capable of connecting external or internal devices as required, and the connected devices include but are not limited to a keypad, a display, a speaker, a microphone, a joystick, and the like.

The processor 810 is responsible for managing the bus architecture and general processing, and the memory 820 may store data used by the processor 810 when performing operations.

In some embodiments, the processor 810 may be a central processing unit (CPU), an application specific integrated circuit (ASIC), a field programmable gate array (FPGA), or a complex programmable logic device (CPLD). The processor may also take the form of a multi-core architecture.

The processor calls the computer program stored in the memory, so as to execute any of the methods according to the embodiments of the present application according to the obtained executable instructions. The processor and the memory may also be arranged physically separately.

In some embodiments, using, based on the multi-access related subscription data or the first multi-access related policy, the first AT and/or the second AT for communication includes: in case of registering with a first network using the first AT and the second AT, using, based on the multi-access related subscription data or the first multi-access related policy, the first AT and/or the second AT for communication; or
in case of initiating registration with a first network using the second AT after registering with the first network using the first AT, using, based on the multi-access related subscription data or the first multi-access related policy, the first AT and/or the second AT for communication.

In some embodiments, using, based on the multi-access related subscription data or the first multi-access related policy, the first AT and/or the second AT for communication includes: performing one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

In some embodiments, before determining the multi-access related subscription data or the first multi-access related policy based on the access related information, the operations further include:
obtaining the access related information from a first network function entity.

In some embodiments, obtaining the access related information from the first network function entity includes:
transmitting a first message to the first network function entity, where the first message is used to request the access related information; and
receiving the access related information from the first network function entity;
where the first message and/or the access related information carries first description information on the UE using the first AT and/or the second AT, and the first description information includes one or more of following:
   an AT type;
   frequency information;
   a slice identifier;
   a data network identifier;
   a session identifier;
   an application identifier;
   UE location information;
   second time information, used to indicate applicable time of the access related information;
   second area information, used to indicate an applicable area of the access related information;
   information on a second energy consumption threshold, used to instruct the first network function entity, in case that the UE using the first AT and/or the second AT reaches or exceeds the second energy consumption threshold, to report the access related information; or
   information on a second energy efficiency threshold, used to instruct the first network function entity, in case that the UE using the first AT and/or the second AT reaches or falls below the second energy efficiency threshold, to report the access related information.

In some embodiments, the information on energy consumption of the UE using the first AT and/or the second AT includes one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
   and/or,
where the information on energy efficiency of the UE using the first AT and/or the second AT includes one or more of following:
   information on energy efficiency of the UE using the first AT and/or the second AT to support a specific application or service;
   information on energy efficiency of the UE using the first AT and/or the second AT to support a session of a specific data network;
   information on energy efficiency of the UE using the first AT and/or the second AT to support a session of a specific network slice; or
   information on statistics or prediction of energy efficiency of the UE using the first AT and/or the second AT.

In some embodiments, the information on energy consumption of the network corresponding to the first AT and/or the second AT includes one or more of following:
information on current energy consumption of the network corresponding to the first AT and/or the second AT; or
information on statistics or prediction of energy consumption of the network corresponding to the first AT and/or the second AT,
   and/or,
where the information on energy efficiency of the network corresponding to the first AT and/or the second AT includes one or more of following:
   information on current energy efficiency of the network corresponding to the first AT and/or the second AT; or
   information on statistics or prediction of energy efficiency of the network corresponding to the first AT and/or the second AT.

In some embodiments, the multi-access related subscription data or the first multi-access related policy includes one or more of following:
information on multiple ATs allowed or prohibited to be simultaneously used;
information on a network slice allowing or prohibiting simultaneous use of multiple ATs for access;
information on a data network allowing or prohibiting simultaneous use of multiple ATs for access;
multiple ATs arranged by priority, in case that a high-priority AT is used, a connection corresponding to a low-priority AT is released;
a policy for transmission of applications or services over connections or sessions corresponding to different ATs in case that multiple ATs are simultaneously used;
a first timer, used to indicate that in case that successfully registering with a first network or successfully establishing a session via the second AT exceeds a duration of the first timer, a connection or session corresponding to the first AT is released or modified;
first time information, used to indicate application of one or more of above policies within a time range specified by the first time information;
first area information, used to indicate application of one or more of above policies within an area specified by the first area information;
information on a first energy consumption threshold, used to indicate that in case that the UE using the first AT and/or the second AT reaches or exceeds the first energy consumption threshold, one or more of above policies are applied;
information on a first energy efficiency threshold, used to indicate that in case that the UE using the first AT and/or the second AT reaches or falls below the first energy efficiency threshold, one or more of above policies are applied.

In some embodiments, determining the multi-access related subscription data or the first multi-access related policy further includes:
obtaining the multi-access related subscription data or the first multi-access related policy from a second network function entity.

It should be noted here that the above-mentioned UE according to the embodiment of the present application may implement all the method steps implemented by the above-mentioned method embodiments in which the execution subject is the UE and may achieve the same effect. The parts and beneficial effects of this embodiment that are the same as those of the method embodiment will not be described in detail here.

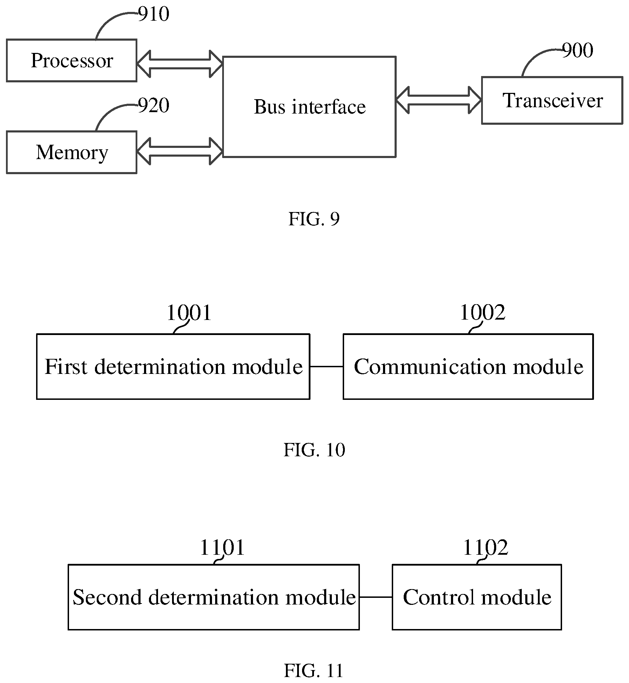

FIG. 9 is a schematic structural diagram of a network device according to an embodiment of the present application. As shown in FIG. 9, the network device includes a memory 920, a transceiver 900, and a processor 910.

The memory 920 is used for storing a computer program, the transceiver 900 is used for transmitting and receiving data under control of the processor 910, and the processor 910 is used for reading the computer program in the memory 920 and performing following operations:
determining multi-access related subscription data or a first multi-access related policy, where the multi-access related subscription data or the first multi-access related policy is used to control a user equipment (UE) to use a first access technology (AT) and/or a second AT for communication; and
controlling, based on the multi-access related subscription data or the first multi-access related policy, the UE to use the first AT and/or the second AT for communication;
where determining the multi-access related subscription data or the first multi-access related policy includes:
   determining the multi-access related subscription data or the first multi-access related policy based on access related information, where the access related information includes one or a combination of following:
   information on energy consumption of the UE using the first AT and/or the second AT;
   information on energy consumption of a network corresponding to the first AT and/or the second AT;
   information on energy efficiency of the UE using the first AT and/or the second AT; or
   information on energy efficiency of a network corresponding to the first AT and/or the second AT.

In FIG. 9, the bus architecture may include any number of interconnected buses and bridges, which are connected together by various circuits such as one or more processors represented by the processor 910 and the memory represented by memory 920. The bus architecture may also connect various other circuits such as peripheral devices, voltage regulators, and power management circuits, which are well known in the art and are therefore not further described herein. The bus interface provides an interface. The transceiver 900 may be a plurality of components, including a transmitter and a receiver, providing a unit for communicating with various other devices on a transmission medium, such as a wireless channel, a wired channel, an optical cable, and the like. The processor 910 is responsible for managing the bus architecture and general processing, and the memory 920 may store data used by the processor 910 when performing operations.

The processor 910 may be a central processing unit (CPU), an application specific integrated circuit (ASIC), a field programmable gate array (FPGA), or a complex programmable logic device (CPLD). The processor may also take the form of a multi-core architecture.

In some embodiments, controlling, based on the multi-access related subscription data or the first multi-access related policy, the UE to use the first AT and/or the second AT for communication includes:
in case that the UE registers with a first network using the first AT and the second AT, controlling, based on the multi-access related subscription data or the first multi-access related policy, the UE to use the first AT and/or the second AT for communication; or
in case that the UE initiates registration with a first network using the second AT after registering with the first network using the first AT, controlling, based on the multi-access related subscription data or the first multi-access related policy, the UE to use the first AT and/or the second AT for communication.

In some embodiments, controlling, based on the multi-access related subscription data or the first multi-access related policy, the UE to use the first AT and/or the second AT for communication includes:
transmitting the multi-access related subscription data or the first multi-access related policy to the UE.

In some embodiments, controlling, based on the multi-access related subscription data or the first multi-access related policy, the UE to use the first AT and/or the second AT for communication includes:
controlling the UE to perform one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

In some embodiments, before determining the multi-access related subscription data or the first multi-access related policy based on the access related information, the operations further include:
obtaining the access related information from a first network function entity.

In some embodiments, obtaining the access related information from the first network function entity includes:
transmitting a first message to the first network function entity, where the first message is used to request the access related information; and
receiving the access related information from the first network function entity;
where the first message and/or the access related information carries first description information on the UE using the first AT and/or the second AT, and the first description information includes one or more of following:
   an AT type;
   frequency information;
   a slice identifier;
   a data network identifier;
   a session identifier;
   an application identifier;
   UE location information;
   second time information, used to indicate applicable time of the access related information;
   second area information, used to indicate an applicable area of the access related information;
   information on a second energy consumption threshold, used to instruct the first network function entity, in case that the UE using the first AT and/or the second AT reaches or exceeds the second energy consumption threshold, to report the access related information; or
   information on a second energy efficiency threshold, used to instruct the first network function entity, in case that the UE using the first AT and/or the second AT reaches or falls below the second energy efficiency threshold, to report the access related information.

In some embodiments, the information on energy consumption of the UE using the first AT and/or the second AT includes one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
   and/or,
where the information on energy efficiency of the UE using the first AT and/or the second AT includes one or more of following:
   information on energy efficiency of the UE using the first AT and/or the second AT to support a specific application or service;
   information on energy efficiency of the UE using the first AT and/or the second AT to support a session of a specific data network;
   information on energy efficiency of the UE using the first AT and/or the second AT to support a session of a specific network slice; or
   information on statistics or prediction of energy efficiency of the UE using the first AT and/or the second AT.

In some embodiments, the information on energy consumption of the network corresponding to the first AT and/or the second AT includes one or more of following:
information on current energy consumption of the network corresponding to the first AT and/or the second AT; or
information on statistics or prediction of energy consumption of the network corresponding to the first AT and/or the second AT,
   and/or,
where the information on energy efficiency of the network corresponding to the first AT and/or the second AT includes one or more of following:
   information on current energy efficiency of the network corresponding to the first AT and/or the second AT; or
   information on statistics or prediction of energy efficiency of the network corresponding to the first AT and/or the second AT.

The above-mentioned network device according to the embodiment of the present application may implement all the method steps implemented by the above-mentioned method embodiments in which the execution subject is the network device and may achieve the same effect. The parts and beneficial effects of this embodiment that are the same as those of the method embodiment will not be described in detail here.

FIG. 10 is a first schematic structural diagram of a communication apparatus according to an embodiment of the present application. As shown in FIG. 10, an embodiment of the present application provides a communication apparatus, including a first determination module 1001 and a communication module 1002.

The first determination module 1001 is used for determining multi-access related subscription data or a first multi-access related policy, where the multi-access related subscription data or the first multi-access related policy is used to control a user equipment (UE) to use a first access technology (AT) and/or a second AT for communication; the communication module 1002 is used for using, based on the multi-access related subscription data or the first multi-access related policy, the first AT and/or the second AT for communication.

The first determination module includes a first determination unit; the first determination unit is used for determining the multi-access related subscription data or the first multi-access related policy based on access related information, where the access related information includes one or a combination of following:
information on energy consumption of the UE using the first AT and/or the second AT;
information on energy consumption of a network corresponding to the first AT and/or the second AT;
information on energy efficiency of the UE using the first AT and/or the second AT; or
information on energy efficiency of a network corresponding to the first AT and/or the second AT.

In some embodiments, using, based on the multi-access related subscription data or the first multi-access related policy, the first AT and/or the second AT for communication includes:
in case of registering with a first network using the first AT and the second AT, using, based on the multi-access related subscription data or the first multi-access related policy, the first AT and/or the second AT for communication; or
in case of initiating registration with a first network using the second AT after registering with the first network using the first AT, using, based on the multi-access related subscription data or the first multi-access related policy, the first AT and/or the second AT for communication.

In some embodiments, using, based on the multi-access related subscription data or the first multi-access related policy, the first AT and/or the second AT for communication includes: performing one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

In some embodiments, the communication apparatus further includes a first obtainment module;
where the first obtainment module is used for obtaining the access related information from a first network function entity.

In some embodiments, the first obtainment module includes a first transmission unit and a first reception unit;
the first transmission unit is used for transmitting a first message to the first network function entity, where the first message is used to request the access related information;
the first reception unit is used for receiving the access related information from the first network function entity;
where the first message and/or the access related information carries first description information on the UE using the first AT and/or the second AT, and the first description information includes one or more of following:
   an AT type;
   frequency information;
   a slice identifier;
   a data network identifier;
   a session identifier;
   an application identifier;
   UE location information;
   second time information, used to indicate applicable time of the access related information;
   second area information, used to indicate an applicable area of the access related information;
   information on a second energy consumption threshold, used to instruct the first network function entity, in case that the UE using the first AT and/or the second AT reaches or exceeds the second energy consumption threshold, to report the access related information; or
   information on a second energy efficiency threshold, used to instruct the first network function entity, in case that the UE using the first AT and/or the second AT reaches or falls below the second energy efficiency threshold, to report the access related information.

In some embodiments, the information on energy consumption of the UE using the first AT and/or the second AT includes one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
   and/or,
where the information on energy efficiency of the UE using the first AT and/or the second AT includes one or more of following:
   information on energy efficiency of the UE using the first AT and/or the second AT to support a specific application or service;
   information on energy efficiency of the UE using the first AT and/or the second AT to support a session of a specific data network;
   information on energy efficiency of the UE using the first AT and/or the second AT to support a session of a specific network slice; or
   information on statistics or prediction of energy efficiency of the UE using the first AT and/or the second AT.

In some embodiments, the information on energy consumption of the network corresponding to the first AT and/or the second AT includes one or more of following:
information on current energy consumption of the network corresponding to the first AT and/or the second AT; or
information on statistics or prediction of energy consumption of the network corresponding to the first AT and/or the second AT,
   and/or,
where the information on energy efficiency of the network corresponding to the first AT and/or the second AT includes one or more of following:
   information on current energy efficiency of the network corresponding to the first AT and/or the second AT; or
   information on statistics or prediction of energy efficiency of the network corresponding to the first AT and/or the second AT.

In some embodiments, the multi-access related subscription data or the first multi-access related policy includes one or more of following:
information on multiple ATs allowed or prohibited to be simultaneously used;
information on a network slice allowing or prohibiting simultaneous use of multiple ATs for access;
information on a data network allowing or prohibiting simultaneous use of multiple ATs for access;
multiple ATs arranged by priority, in case that a high-priority AT is used, a connection corresponding to a low-priority AT is released;
a policy for transmission of applications or services over connections or sessions corresponding to different ATs in case that multiple ATs are simultaneously used;
a first timer, used to indicate that in case that successfully registering with a first network or successfully establishing a session via the second AT exceeds a duration of the first timer, a connection or session corresponding to the first AT is released or modified;
first time information, used to indicate application of one or more of above policies within a time range specified by the first time information;
first area information, used to indicate application of one or more of above policies within an area specified by the first area information;
information on a first energy consumption threshold, used to indicate that in case that the UE using the first AT and/or the second AT reaches or exceeds the first energy consumption threshold, one or more of above policies are applied;
information on a first energy efficiency threshold, used to indicate that in case that the UE using the first AT and/or the second AT reaches or falls below the first energy efficiency threshold, one or more of above policies are applied.

In some embodiments, the first determination module further includes a second determination unit;
the second determination unit is used for obtaining the multi-access related subscription data or the first multi-access related policy from a second network function entity.

The above-mentioned communication apparatus according to the embodiment of the present application may implement all the method steps implemented by the above-mentioned method embodiments in which the execution subject is the UE and may achieve the same effect. The parts and beneficial effects of this embodiment that are the same as those of the method embodiment will not be described in detail here.

FIG. 11 is a second schematic structural diagram of a communication apparatus according to an embodiment of the present application. As shown in FIG. 11, an embodiment of the present application provides a communication apparatus, including a second determination module 1101 and a control module 1102.

The second determination module 1101 is used for determining multi-access related subscription data or a first multi-access related policy, where the multi-access related subscription data or the first multi-access related policy is used to control a user equipment (UE) to use a first access technology (AT) and/or a second AT for communication; the control module 1102 is used for controlling, based on the multi-access related subscription data or the first multi-access related policy, the UE to use the first AT and/or the second AT for communication;
the second determination module includes a third determination unit;
the third determination unit is used for determining the multi-access related subscription data or the first multi-access related policy based on access related information, where the access related information includes one or a combination of following:
   information on energy consumption of the UE using the first AT and/or the second AT; information on energy consumption of a network corresponding to the first AT and/or the second AT;
   information on energy efficiency of the UE using the first AT and/or the second AT; or
   information on energy efficiency of a network corresponding to the first AT and/or the second AT.

In some embodiments, controlling, based on the multi-access related subscription data or the first multi-access related policy, the UE to use the first AT and/or the second AT for communication includes:
in case that the UE registers with a first network using the first AT and the second AT, controlling, based on the multi-access related subscription data or the first multi-access related policy, the UE to use the first AT and/or the second AT for communication; or
in case that the UE initiates registration with a first network using the second AT after registering with the first network using the first AT, controlling, based on the multi-access related subscription data or the first multi-access related policy, the UE to use the first AT and/or the second AT for communication.

In some embodiments, the control module includes a second transmission unit;
the second transmission unit is used for transmitting the multi-access related subscription data or the first multi-access related policy to the UE.

In some embodiments, controlling, based on the multi-access related subscription data or the first multi-access related policy, the UE to use the first AT and/or the second AT for communication includes:
controlling the UE to perform one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

In some embodiments, the communication apparatus further includes a second obtainment module,
where the second obtainment module is used for obtaining the access related information from a first network function entity.

In some embodiments, the second obtainment module includes a third transmission unit and a second reception unit;
the third transmission unit is used for transmitting a first message to the first network function entity, where the first message is used to request the access related information;
the second reception unit is used for receiving the access related information from the first network function entity;
where the first message and/or the access related information carries first description information on the UE using the first AT and/or the second AT, and the first description information includes one or more of following:
   an AT type;
   frequency information;
   a slice identifier;
   a data network identifier;
   a session identifier;
   an application identifier;
   UE location information;
   second time information, used to indicate applicable time of the access related information;
   second area information, used to indicate an applicable area of the access related information;
   information on a second energy consumption threshold, used to instruct the first network function entity, in case that the UE using the first AT and/or the second AT reaches or exceeds the second energy consumption threshold, to report the access related information; or
   information on a second energy efficiency threshold, used to instruct the first network function entity, in case that the UE using the first AT and/or the second AT reaches or falls below the second energy efficiency threshold, to report the access related information.

In some embodiments, the information on energy consumption of the UE using the first AT and/or the second AT includes one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
   and/or,
where the information on energy efficiency of the UE using the first AT and/or the second AT includes one or more of following:
   information on energy efficiency of the UE using the first AT and/or the second AT to support a specific application or service;
   information on energy efficiency of the UE using the first AT and/or the second AT to support a session of a specific data network;
   information on energy efficiency of the UE using the first AT and/or the second AT to support a session of a specific network slice; or
   information on statistics or prediction of energy efficiency of the UE using the first AT and/or the second AT.

In some embodiments, the information on energy consumption of the network corresponding to the first AT and/or the second AT includes one or more of following:
information on current energy consumption of the network corresponding to the first AT and/or the second AT; or
information on statistics or prediction of energy consumption of the network corresponding to the first AT and/or the second AT,
   and/or,
where the information on energy efficiency of the network corresponding to the first AT and/or the second AT includes one or more of following:
   information on current energy efficiency of the network corresponding to the first AT and/or the second AT; or
   information on statistics or prediction of energy efficiency of the network corresponding to the first AT and/or the second AT.

The above-mentioned communication apparatus according to the embodiment of the present application may implement all the method steps implemented by the above-mentioned method embodiments in which the execution subject is the network device and may achieve the same effect. The parts and beneficial effects of this embodiment that are the same as those of the method embodiment will not be described in detail here.

It should be noted that the division of units/modules in the above-mentioned embodiments of the present application is schematic and is merely a logical functional division. In actual implementation, other division methods may be used. Furthermore, the functional units in the various embodiments of the present application may be integrated into a single processing unit, or each unit may exist physically separately, or two or more units may be integrated into a single unit. The above-mentioned integrated units may be implemented in the form of hardware or software functional units.

When the integrated unit is implemented in the form of a software functional unit and sold or used as an independent product, it may be stored in a processor-readable storage medium. Based on this understanding, the solution of the present application, or the part that contributes to the related art, or all or part of the solution may be embodied in the form of a software product. The computer software product is stored in a storage medium and includes a number of instructions for enabling a computer device (which may be a personal computer, server, or network device, etc.) or a processor to execute all or part of the steps of the method described in each embodiment of the present application. The aforementioned storage medium includes a U disk, a mobile hard disk, a read-only memory (ROM), a random access memory (RAM), a disk, an optical disk, and other medium that may store program code.

In some embodiments, a non-transitory readable storage medium storing a computer program is further provided, where the computer program is used for causing a processor to execute the communication method according to each method embodiment above.

The above-mentioned non-transitory readable storage medium according to the embodiment of the present application may implement all the method steps implemented by the above-mentioned method embodiments, and may achieve the same technical effects. The parts and beneficial effects of this embodiment that are the same as those of the method embodiment will not be described in detail here.

It should be noted that the non-transitory readable storage medium may be any available medium or data storage device that may be accessed by a processor, including but not limited to magnetic storage (such as floppy disks, hard disks, magnetic tapes, magneto-optical disks (MO), etc.), optical storage (such as CDs, DVDs, BDs, HVDs, etc.), and semiconductor storage (such as ROMs, EPROMs, EEPROMs, non-volatile memories (NAND FLASH), solid-state drives (SSDs)), etc.

In some embodiments, a processor-readable storage medium storing a computer program is further provided, where the computer program is used for causing a processor to execute the communication method according to each method embodiment above.

The above-mentioned processor-readable storage medium according to the embodiment of the present application may implement all the method steps implemented by the above-mentioned method embodiments, and may achieve the same technical effects. The parts and beneficial effects of this embodiment that are the same as those of the method embodiment will not be described in detail here.

In some embodiments, a computer-readable storage medium storing a computer program is further provided, where the computer program is used for causing a computer to execute the communication method according to each method embodiment above.

The above-mentioned computer-readable storage medium according to the embodiment of the present application may implement all the method steps implemented by the above-mentioned method embodiments, and may achieve the same technical effects. The parts and beneficial effects of this embodiment that are the same as those of the method embodiment will not be described in detail here.

In some embodiments, a communication device storing a computer program is further provided, where the computer program is used for causing the communication device to execute the communication method according to each method embodiment above.

The above-mentioned communication device according to the embodiment of the present application may implement all the method steps implemented by the above-mentioned method embodiments, and may achieve the same technical effects. The parts and beneficial effects of this embodiment that are the same as those of the method embodiment will not be described in detail here.

In some embodiments, a chip product storing a computer program is further provided, where the computer program is used for causing the chip product to execute the communication method according to each method embodiment above.

The above-mentioned chip product according to the embodiment of the present application may implement all the method steps implemented by the above-mentioned method embodiments, and may achieve the same technical effects. The parts and beneficial effects of this embodiment that are the same as those of the method embodiment will not be described in detail here.

It should also be noted that the terms "first", "second" and the like in the embodiments of the present application are used to distinguish similar objects, and are not used to describe a specific order or precedence. It should be understood that the terms used in this manner are interchangeable where appropriate, such that the embodiments of the present application may be implemented in an order other than that illustrated or described herein. Furthermore, the terms "first" and "second" generally distinguish objects of the same type, and do not limit the number of objects. For example, the first object may be one or more.

"And/or" in the embodiments of the application describes the association relationship of associated objects, indicating that three relationships may exist. For example, A and/or B may mean A exists alone, A and B exist at the same time, and B exists alone. The character "/" generally indicates that the previous and next associated objects are in an "or" relationship.

In an embodiment of the present application, "determine B based on A" means that factor A should be considered when determining B. It is not limited to "B may be determined based solely on A", but should also include: "determine B based on A and C", "determine B based on A, C, and E", "determine C based on A, and further determine B based on C", etc. Additionally, it may include using A as a condition for determining B, for example, "when A meets the first condition, determine B using the first method", or "when A meets the second condition, determine B", etc., or "when A meets the third condition, determine B based on the first parameter", etc. Of course, it may also be a condition where A is a factor in determining B, for example, "when A meets the first condition, determine C using the first method, and further determine B based on C", etc.

In the embodiments of the application, the term "plurality" refers to two or more than two, and other quantifiers are similar thereto.

The solutions provided by the embodiments of the present application may be applied to a variety of systems, particularly 5G systems. For example, applicable systems may include the global system of mobile communication (GSM) system, the code division multi-access (CDMA) system, the wideband code division multi-access (WCDMA) general packet radio service (GPRS) system, the long term evolution (LTE) system, the LTE frequency division duplex (FDD) system, the LTE time division duplex (TDD) system, the long term evolution advanced (LTE-A) system, the universal mobile telecommunication system (UMTS), the worldwide interoperability for microwave access (WiMAX) system, and the 5G new radio (NR) system. These various systems include terminal devices and network devices. The systems may also include core network components, such as the evolved packet system (EPS) and the 5G system (5GS).

The embodiments of the present application relate to terminal devices, which may refer to devices that provide voice and/or data connectivity to users, handheld devices with wireless connectivity, or other processing devices connected to wireless modems. The names of terminal devices may vary in different systems. For example, in 5G systems, a terminal device may be referred to as user equipment (UE). A wireless terminal device may communicate with one or more core networks (CNs) via a radio access network (RAN). The wireless terminal device may be a mobile terminal device, such as a mobile phone (also called "cellular" phone), and a computer with the mobile terminal device. For example, the wireless terminal device may be a portable, pocket-sized, hand held, built-in computer, or in-vehicle mobile device that exchanges voice and /or data with the radio access network. Examples include a personal communication service (PCS) phone, a cordless phone, a session initiated protocol (SIP) phone, a wireless local loop (WLL) station, a personal digital assistant (PDA) and the like. The wireless terminal device may also be referred to as a system, a subscriber unit, a subscriber station, a mobile station, a mobile, a remote station, an access point, a remote terminal, an access terminal, a user terminal, a user agent, or a user device, but is not limited in the embodiments of the present application.

The embodiments of the present application relate to network devices, which may refer to base stations, and the base stations may include multiple cells providing services to terminals. Depending on the specific application scenario, a base station may also be called an access point, or may be a device in an access network that communicates with a wireless terminal device via one or more sectors over the air interface, or may be called another name. The network device may be used to interchange received air frames with internet protocol (IP) packets, acting as a router between the wireless terminal device and the rest of the access network, which may include an internet protocol (IP) communication network. The network device may also coordinate attribute management of the air interface. For example, the network device in the embodiments of the present application may be base transceiver stations (BTSs) in the global system for mobile communications (GSM) or code division multi-access (CDMA), NodeBs in the wide-band code division multi-access (WCDMA), evolutionary NodeBs (eNBs or e-NodeBs) in the long term evolution (LTE) system, 5G base stations (gNBs) in the next generation 5G next generation system, home evolved NodeBs (HeNBs), relay nodes, femtos, picos, etc., and are not limited in the embodiments of the present application. In some network structures, the network device may include centralized unit (CU) nodes and distributed unit (DU) nodes, and the centralized unit and the distributed unit may also be geographically separated.

The network device and the terminal device may each use one or more antennas for multiple input multiple output (MIMO) transmission. MIMO transmission may be either single user MIMO (SU-MIMO) or multi user MIMO (MU-MIMO). Depending on the form and number of antennas, MIMO transmission may be 2D-MIMO, 3D-MIMO, FD-MIMO, or Massive-MIMO, or may be diversity transmission, precoding, or beamforming.

Those skilled in the art will appreciate that the embodiments of the present application may be provided as methods, systems, or computer program products. Thus, the present application may take the form of an entirely hardware embodiment, an entirely software embodiment, or an embodiment combining software and hardware. Furthermore, the present application may take the form of a computer program product implemented on one or more computer-usable storage medium (including but not limited to magnetic disk storage and optical storage) containing computer-usable program code.

The present application is described with reference to flowcharts and/or block diagrams of methods, devices (systems), and computer program products according to the embodiments of the present application. It should be understood that each process and/or block in the flowcharts and/or block diagrams, as well as combinations of processes and/or blocks in the flowcharts and/or block diagrams, may be implemented by computer-executable instructions. These computer-executable instructions may be provided to a processor of a general-purpose computer, a special-purpose computer, an embedded processor, or other programmable data processing device to produce a machine, such that the instructions executed by the processor of the computer or other programmable data processing device produce an apparatus for implementing the functions specified in one or more processes in the flowcharts and/or one or more blocks in the block diagrams.

These processor-executable instructions may also be stored in a processor-readable memory that may direct a computer or other programmable data processing device to operate in a specific manner, so that the instructions stored in the processor-readable memory produce a product including an instruction apparatus that implements the functions specified in one or more processes in the flowchart and/or one or more blocks in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more blocks in the block diagram.

Those skilled in the art may make various changes and modifications to the present application without departing from the spirit and scope of the present application. Thus, if these modifications and variations of the present application fall within the scope of the claims of the present application and their equivalents, the present application is intended to include these modifications and variations.

## Claims

1. A communication method, performed by a user equipment (UE), comprising:
determining multi-access related subscription data or a first multi-access related policy, wherein the multi-access related subscription data or the first multi-access related policy is used to control the UE to use a first access technology (AT) and/or a second AT for communication; and
using, based on the multi-access related subscription data or the first multi-access related policy, the first AT and/or the second AT for communication;
wherein determining the multi-access related subscription data or the first multi-access related policy comprises:
determining the multi-access related subscription data or the first multi-access related policy based on access related information, wherein the access related information comprises one or a combination of following:
information on energy consumption of the UE using the first AT and/or the second AT;
information on energy consumption of a network corresponding to the first AT and/or the second AT;
information on energy efficiency of the UE using the first AT and/or the second AT; or
information on energy efficiency of a network corresponding to the first AT and/or the second AT.

2. The communication method of claim 1, wherein using, based on the multi-access related subscription data or the first multi-access related policy, the first AT and/or the second AT for communication comprises:
in case of registering with a first network using the first AT and the second AT, using, based on the multi-access related subscription data or the first multi-access related policy, the first AT and/or the second AT for communication; or
in case of initiating registration with a first network using the second AT after registering with the first network using the first AT, using, based on the multi-access related subscription data or the first multi-access related policy, the first AT and/or the second AT for communication.

3. The communication method of claim 1, wherein using, based on the multi-access related subscription data or the first multi-access related policy, the first AT and/or the second AT for communication comprises:
performing one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

4. The communication method of claim 1, wherein before determining the multi-access related subscription data or the first multi-access related policy based on the access related information, the method further comprises:
obtaining the access related information from a first network function entity.

5. The communication method of claim 4, wherein obtaining the access related information from the first network function entity comprises:
transmitting a first message to the first network function entity, wherein the first message is used to request the access related information; and
receiving the access related information from the first network function entity;
wherein the first message and/or the access related information carries first description information on the UE using the first AT and/or the second AT, and the first description information comprises one or more of following:
an AT type;
frequency information;
a slice identifier;
a data network identifier;
a session identifier;
an application identifier;
UE location information;
second time information, used to indicate applicable time of the access related information;
second area information, used to indicate an applicable area of the access related information;
information on a second energy consumption threshold, used to instruct the first network function entity, in case that the UE using the first AT and/or the second AT reaches or exceeds the second energy consumption threshold, to report the access related information; or
information on a second energy efficiency threshold, used to instruct the first network function entity, in case that the UE using the first AT and/or the second AT reaches or falls below the second energy efficiency threshold, to report the access related information.

6. The communication method of claim 1, wherein the information on energy consumption of the UE using the first AT and/or the second AT comprises one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
and/or,
wherein the information on energy efficiency of the UE using the first AT and/or the second AT comprises one or more of following:
information on energy efficiency of the UE using the first AT and/or the second AT to support a specific application or service;
information on energy efficiency of the UE using the first AT and/or the second AT to support a session of a specific data network;
information on energy efficiency of the UE using the first AT and/or the second AT to support a session of a specific network slice; or
information on statistics or prediction of energy efficiency of the UE using the first AT and/or the second AT.

7. The communication method of claim 1, wherein the information on energy consumption of the network corresponding to the first AT and/or the second AT comprises one or more of following:
information on current energy consumption of the network corresponding to the first AT and/or the second AT; or
information on statistics or prediction of energy consumption of the network corresponding to the first AT and/or the second AT,
and/or,
wherein the information on energy efficiency of the network corresponding to the first AT and/or the second AT comprises one or more of following:
information on current energy efficiency of the network corresponding to the first AT and/or the second AT; or
information on statistics or prediction of energy efficiency of the network corresponding to the first AT and/or the second AT.

8. The communication method of claim 1, wherein the multi-access related subscription data or the first multi-access related policy comprises one or more of following:
information on multiple ATs allowed or prohibited to be simultaneously used;
information on a network slice allowing or prohibiting simultaneous use of multiple ATs for access;
information on a data network allowing or prohibiting simultaneous use of multiple ATs for access;
multiple ATs arranged by priority, in case that a high-priority AT is used, a connection corresponding to a low-priority AT is released;
a policy for transmission of applications or services over connections or sessions corresponding to different ATs in case that multiple ATs are simultaneously used;
a first timer, used to indicate that in case that successfully registering with a first network or successfully establishing a session via the second AT exceeds a duration of the first timer, a connection or session corresponding to the first AT is released or modified;
first time information, used to indicate application of one or more of above policies within a time range specified by the first time information;
first area information, used to indicate application of one or more of above policies within an area specified by the first area information;
information on a first energy consumption threshold, used to indicate that in case that the UE using the first AT and/or the second AT reaches or exceeds the first energy consumption threshold, one or more of above policies are applied;
information on a first energy efficiency threshold, used to indicate that in case that the UE using the first AT and/or the second AT reaches or falls below the first energy efficiency threshold, one or more of above policies are applied.

9. The communication method of claim 1, wherein determining the multi-access related subscription data or the first multi-access related policy further comprises:
obtaining the multi-access related subscription data or the first multi-access related policy from a second network function entity.

10. A communication method, performed by a network device, comprising:
determining multi-access related subscription data or a first multi-access related policy, wherein the multi-access related subscription data or the first multi-access related policy is used to control a user equipment (UE) to use a first access technology (AT) and/or a second AT for communication; and
controlling, based on the multi-access related subscription data or the first multi-access related policy, the UE to use the first AT and/or the second AT for communication;
wherein determining the multi-access related subscription data or the first multi-access related policy comprises:
determining the multi-access related subscription data or the first multi-access related policy based on access related information, wherein the access related information comprises one or a combination of following:
information on energy consumption of the UE using the first AT and/or the second AT;
information on energy consumption of a network corresponding to the first AT and/or the second AT;
information on energy efficiency of the UE using the first AT and/or the second AT; or
information on energy efficiency of a network corresponding to the first AT and/or the second AT.

11. The communication method of claim 10, wherein controlling, based on the multi-access related subscription data or the first multi-access related policy, the UE to use the first AT and/or the second AT for communication comprises:
in case that the UE registers with a first network using the first AT and the second AT, controlling, based on the multi-access related subscription data or the first multi-access related policy, the UE to use the first AT and/or the second AT for communication; or
in case that the UE initiates registration with a first network using the second AT after registering with the first network using the first AT, controlling, based on the multi-access related subscription data or the first multi-access related policy, the UE to use the first AT and/or the second AT for communication.

12. The communication method of claim 10, wherein controlling, based on the multi-access related subscription data or the first multi-access related policy, the UE to use the first AT and/or the second AT for communication comprises:
transmitting the multi-access related subscription data or the first multi-access related policy to the UE.

13. The communication method of claim 10, wherein controlling, based on the multi-access related subscription data or the first multi-access related policy, the UE to use the first AT and/or the second AT for communication comprises:
controlling the UE to perform one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

14. The communication method of claim 10, wherein before determining the multi-access related subscription data or the first multi-access related policy based on the access related information, the method further comprises:
obtaining the access related information from a first network function entity.

15. The communication method of claim 14, wherein obtaining the access related information from the first network function entity comprises:
transmitting a first message to the first network function entity, wherein the first message is used to request the access related information; and
receiving the access related information from the first network function entity;
wherein the first message and/or the access related information carries first description information on the UE using the first AT and/or the second AT, and the first description information comprises one or more of following:
an AT type;
frequency information;
a slice identifier;
a data network identifier;
a session identifier;
an application identifier;
UE location information;
second time information, used to indicate applicable time of the access related information;
second area information, used to indicate an applicable area of the access related information;
information on a second energy consumption threshold, used to instruct the first network function entity, in case that the UE using the first AT and/or the second AT reaches or exceeds the second energy consumption threshold, to report the access related information; or
information on a second energy efficiency threshold, used to instruct the first network function entity, in case that the UE using the first AT and/or the second AT reaches or falls below the second energy efficiency threshold, to report the access related information.

16. The communication method of claim 10, wherein the information on energy consumption of the UE using the first AT and/or the second AT comprises one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
and/or,
wherein the information on energy efficiency of the UE using the first AT and/or the second AT comprises one or more of following:
information on energy efficiency of the UE using the first AT and/or the second AT to support a specific application or service;
information on energy efficiency of the UE using the first AT and/or the second AT to support a session of a specific data network;
information on energy efficiency of the UE using the first AT and/or the second AT to support a session of a specific network slice; or
information on statistics or prediction of energy efficiency of the UE using the first AT and/or the second AT.

17. The communication method of claim 10, wherein the information on energy consumption of the network corresponding to the first AT and/or the second AT comprises one or more of following:
information on current energy consumption of the network corresponding to the first AT and/or the second AT; or
information on statistics or prediction of energy consumption of the network corresponding to the first AT and/or the second AT,
and/or,
wherein the information on energy efficiency of the network corresponding to the first AT and/or the second AT comprises one or more of following:
information on current energy efficiency of the network corresponding to the first AT and/or the second AT; or
information on statistics or prediction of energy efficiency of the network corresponding to the first AT and/or the second AT.

18. A user equipment (UE), comprising a memory, a transceiver, and a processor,
wherein the memory is used for storing a computer program, the transceiver is used for transmitting and receiving data under control of the processor, and the processor is used for reading the computer program in the memory and performing following operations:
determining multi-access related subscription data or a first multi-access related policy, wherein the multi-access related subscription data or the first multi-access related policy is used to control the UE to use a first access technology (AT) and/or a second AT for communication; and
using, based on the multi-access related subscription data or the first multi-access related policy, the first AT and/or the second AT for communication;
wherein determining the multi-access related subscription data or the first multi-access related policy comprises:
determining the multi-access related subscription data or the first multi-access related policy based on access related information, wherein the access related information comprises one or a combination of following:
information on energy consumption of the UE using the first AT and/or the second AT;
information on energy consumption of a network corresponding to the first AT and/or the second AT;
information on energy efficiency of the UE using the first AT and/or the second AT; or
information on energy efficiency of a network corresponding to the first AT and/or the second AT.

19. The UE of claim 18, wherein using, based on the multi-access related subscription data or the first multi-access related policy, the first AT and/or the second AT for communication comprises:
in case of registering with a first network using the first AT and the second AT, using, based on the multi-access related subscription data or the first multi-access related policy, the first AT and/or the second AT for communication; or
in case of initiating registration with a first network using the second AT after registering with the first network using the first AT, using, based on the multi-access related subscription data or the first multi-access related policy, the first AT and/or the second AT for communication.

20. The UE of claim 18, wherein using, based on the multi-access related subscription data or the first multi-access related policy, the first AT and/or the second AT for communication comprises:
performing one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a first application or service using the first AT to a connection using the second AT.

21. The UE of claim 18, wherein before determining the multi-access related subscription data or the first multi-access related policy based on the access related information, the operations further comprise:
obtaining the access related information from a first network function entity.

22. The UE of claim 21, wherein obtaining the access related information from the first network function entity comprises:
transmitting a first message to the first network function entity, wherein the first message is used to request the access related information; and
receiving the access related information from the first network function entity;
wherein the first message and/or the access related information carries first description information on the UE using the first AT and/or the second AT, and the first description information comprises one or more of following:
an AT type;
frequency information;
a slice identifier;
a data network identifier;
a session identifier;
an application identifier;
UE location information;
second time information, used to indicate applicable time of the access related information;
second area information, used to indicate an applicable area of the access related information;
information on a second energy consumption threshold, used to instruct the first network function entity, in case that the UE using the first AT and/or the second AT reaches or exceeds the second energy consumption threshold, to report the access related information; or
information on a second energy efficiency threshold, used to instruct the first network function entity, in case that the UE using the first AT and/or the second AT reaches or falls below the second energy efficiency threshold, to report the access related information.

23. The UE of claim 18, wherein the information on energy consumption of the UE using the first AT and/or the second AT comprises one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
and/or,
wherein the information on energy efficiency of the UE using the first AT and/or the second AT comprises one or more of following:
information on energy efficiency of the UE using the first AT and/or the second AT to support a specific application or service;
information on energy efficiency of the UE using the first AT and/or the second AT to support a session of a specific data network;
information on energy efficiency of the UE using the first AT and/or the second AT to support a session of a specific network slice; or
information on statistics or prediction of energy efficiency of the UE using the first AT and/or the second AT.

24. The UE of claim 18, wherein the information on energy consumption of the network corresponding to the first AT and/or the second AT comprises one or more of following:
information on current energy consumption of the network corresponding to the first AT and/or the second AT; or
information on statistics or prediction of energy consumption of the network corresponding to the first AT and/or the second AT,
and/or,
wherein the information on energy efficiency of the network corresponding to the first AT and/or the second AT comprises one or more of following:
information on current energy efficiency of the network corresponding to the first AT and/or the second AT; or
information on statistics or prediction of energy efficiency of the network corresponding to the first AT and/or the second AT.

25. The UE of claim 18, wherein the multi-access related subscription data or the first multi-access related policy comprises one or more of following:
information on multiple ATs allowed or prohibited to be simultaneously used;
information on a network slice allowing or prohibiting simultaneous use of multiple ATs for access;
information on a data network allowing or prohibiting simultaneous use of multiple ATs for access;
multiple ATs arranged by priority, in case that a high-priority AT is used, a connection corresponding to a low-priority AT is released;
a policy for transmission of applications or services over connections or sessions corresponding to different ATs in case that multiple ATs are simultaneously used;
a first timer, used to indicate that in case that successfully registering with a first network or successfully establishing a session via the second AT exceeds a duration of the first timer, a connection or session corresponding to the first AT is released or modified;
first time information, used to indicate application of one or more of above policies within a time range specified by the first time information;
first area information, used to indicate application of one or more of above policies within an area specified by the first area information;
information on a first energy consumption threshold, used to indicate that in case that the UE using the first AT and/or the second AT reaches or exceeds the first energy consumption threshold, one or more of above policies are applied;
information on a first energy efficiency threshold, used to indicate that in case that the UE using the first AT and/or the second AT reaches or falls below the first energy efficiency threshold, one or more of above policies are applied.

26. The UE of claim 18, wherein determining the multi-access related subscription data or the first multi-access related policy further comprises:
obtaining the multi-access related subscription data or the first multi-access related policy from a second network function entity.

27. A network device, comprising a memory, a transceiver, and a processor,
wherein the memory is used for storing a computer program, the transceiver is used for transmitting and receiving data under control of the processor, and the processor is used for reading the computer program in the memory and performing following operations:
determining multi-access related subscription data or a first multi-access related policy, wherein the multi-access related subscription data or the first multi-access related policy is used to control a user equipment (UE) to use a first access technology (AT) and/or a second AT for communication; and
controlling, based on the multi-access related subscription data or the first multi-access related policy, the UE to use the first AT and/or the second AT for communication;
wherein determining the multi-access related subscription data or the first multi-access related policy comprises:
determining the multi-access related subscription data or the first multi-access related policy based on access related information, wherein the access related information comprises one or a combination of following:
information on energy consumption of the UE using the first AT and/or the second AT;
information on energy consumption of a network corresponding to the first AT and/or the second AT;
information on energy efficiency of the UE using the first AT and/or the second AT; or
information on energy efficiency of a network corresponding to the first AT and/or the second AT.

28. The network device of claim 27, wherein controlling, based on the multi-access related subscription data or the first multi-access related policy, the UE to use the first AT and/or the second AT for communication comprises:
in case that the UE registers with a first network using the first AT and the second AT, controlling, based on the multi-access related subscription data or the first multi-access related policy, the UE to use the first AT and/or the second AT for communication; or
in case that the UE initiates registration with a first network using the second AT after registering with the first network using the first AT, controlling, based on the multi-access related subscription data or the first multi-access related policy, the UE to use the first AT and/or the second AT for communication.

29. The network device of claim 27, wherein controlling, based on the multi-access related subscription data or the first multi-access related policy, the UE to use the first AT and/or the second AT for communication comprises:
transmitting the multi-access related subscription data or the first multi-access related policy to the UE.

30. The network device of claim 27, wherein controlling, based on the multi-access related subscription data or the first multi-access related policy, the UE to use the first AT and/or the second AT for communication comprises:
controlling the UE to perform one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

31. The network device of claim 27, wherein before determining the multi-access related subscription data or the first multi-access related policy based on the access related information, the operations further comprise:
obtaining the access related information from a first network function entity.

32. The network device of claim 31, wherein obtaining the access related information from the first network function entity comprises:
transmitting a first message to the first network function entity, wherein the first message is used to request the access related information; and
receiving the access related information from the first network function entity;
wherein the first message and/or the access related information carries first description information on the UE using the first AT and/or the second AT, and the first description information comprises one or more of following:
an AT type;
frequency information;
a slice identifier;
a data network identifier;
a session identifier;
an application identifier;
UE location information;
second time information, used to indicate applicable time of the access related information;
second area information, used to indicate an applicable area of the access related information;
information on a second energy consumption threshold, used to instruct the first network function entity, in case that the UE using the first AT and/or the second AT reaches or exceeds the second energy consumption threshold, to report the access related information; or
information on a second energy efficiency threshold, used to instruct the first network function entity, in case that the UE using the first AT and/or the second AT reaches or falls below the second energy efficiency threshold, to report the access related information.

33. The network device of claim 27, wherein the information on energy consumption of the UE using the first AT and/or the second AT comprises one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
and/or,
wherein the information on energy efficiency of the UE using the first AT and/or the second AT comprises one or more of following:
information on energy efficiency of the UE using the first AT and/or the second AT to support a specific application or service;
information on energy efficiency of the UE using the first AT and/or the second AT to support a session of a specific data network;
information on energy efficiency of the UE using the first AT and/or the second AT to support a session of a specific network slice; or
information on statistics or prediction of energy efficiency of the UE using the first AT and/or the second AT.

34. The network device of claim 27, wherein the information on energy consumption of the network corresponding to the first AT and/or the second AT comprises one or more of following:
information on current energy consumption of the network corresponding to the first AT and/or the second AT; or
information on statistics or prediction of energy consumption of the network corresponding to the first AT and/or the second AT,
and/or,
wherein the information on energy efficiency of the network corresponding to the first AT and/or the second AT comprises one or more of following:
information on current energy efficiency of the network corresponding to the first AT and/or the second AT; or
information on statistics or prediction of energy efficiency of the network corresponding to the first AT and/or the second AT.

35. A communication apparatus, comprising:
a first determination module, used for determining multi-access related subscription data or a first multi-access related policy, wherein the multi-access related subscription data or the first multi-access related policy is used to control a user equipment (UE) to use a first access technology (AT) and/or a second AT for communication; and
a communication module, used for using, based on the multi-access related subscription data or the first multi-access related policy, the first AT and/or the second AT for communication;
wherein determining the multi-access related subscription data or the first multi-access related policy comprises:
determining the multi-access related subscription data or the first multi-access related policy based on access related information, wherein the access related information comprises one or a combination of following:
information on energy consumption of the UE using the first AT and/or the second AT;
information on energy consumption of a network corresponding to the first AT and/or the second AT;
information on energy efficiency of the UE using the first AT and/or the second AT; or
information on energy efficiency of a network corresponding to the first AT and/or the second AT.

36. The communication apparatus of claim 35, wherein using, based on the multi-access related subscription data or the first multi-access related policy, the first AT and/or the second AT for communication comprises:
in case of registering with a first network using the first AT and the second AT, using, based on the multi-access related subscription data or the first multi-access related policy, the first AT and/or the second AT for communication; or
in case of initiating registration with a first network using the second AT after registering with the first network using the first AT, using, based on the multi-access related subscription data or the first multi-access related policy, the first AT and/or the second AT for communication.

37. The communication apparatus of claim 35, wherein using, based on the multi-access related subscription data or the first multi-access related policy, the first AT and/or the second AT for communication comprises:
performing one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a first application or service using the first AT to a connection using the second AT.

38. The communication apparatus of claim 35, further comprising a first obtainment module, wherein the first obtainment module is used for obtaining the access related information from a first network function entity.

39. The communication apparatus of claim 38, wherein the first obtainment module comprises a first transmission unit and a first reception unit,
the first transmission unit is used for transmitting a first message to the first network function entity, wherein the first message is used to request the access related information;
the first reception unit is used for receiving the access related information from the first network function entity;
wherein the first message and/or the access related information carries first description information on the UE using the first AT and/or the second AT, and the first description information comprises one or more of following:
an AT type;
frequency information;
a slice identifier;
a data network identifier;
a session identifier;
an application identifier;
UE location information;
second time information, used to indicate applicable time of the access related information;
second area information, used to indicate an applicable area of the access related information;
information on a second energy consumption threshold, used to instruct the first network function entity, in case that the UE using the first AT and/or the second AT reaches or exceeds the second energy consumption threshold, to report the access related information; or
information on a second energy efficiency threshold, used to instruct the first network function entity, in case that the UE using the first AT and/or the second AT reaches or falls below the second energy efficiency threshold, to report the access related information.

40. The communication apparatus of claim 35, wherein the information on energy consumption of the UE using the first AT and/or the second AT comprises one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
and/or,
wherein the information on energy efficiency of the UE using the first AT and/or the second AT comprises one or more of following:
information on energy efficiency of the UE using the first AT and/or the second AT to support a specific application or service;
information on energy efficiency of the UE using the first AT and/or the second AT to support a session of a specific data network;
information on energy efficiency of the UE using the first AT and/or the second AT to support a session of a specific network slice; or
information on statistics or prediction of energy efficiency of the UE using the first AT and/or the second AT.

41. The communication apparatus of claim 35, wherein the information on energy consumption of the network corresponding to the first AT and/or the second AT comprises one or more of following:
information on current energy consumption of the network corresponding to the first AT and/or the second AT; or
information on statistics or prediction of energy consumption of the network corresponding to the first AT and/or the second AT,
and/or,
wherein the information on energy efficiency of the network corresponding to the first AT and/or the second AT comprises one or more of following:
information on current energy efficiency of the network corresponding to the first AT and/or the second AT; or
information on statistics or prediction of energy efficiency of the network corresponding to the first AT and/or the second AT.

42. The communication apparatus of claim 35, wherein the multi-access related subscription data or the first multi-access related policy comprises one or more of following:
information on multiple ATs allowed or prohibited to be simultaneously used;
information on a network slice allowing or prohibiting simultaneous use of multiple ATs for access;
information on a data network allowing or prohibiting simultaneous use of multiple ATs for access;
multiple ATs arranged by priority, in case that a high-priority AT is used, a connection corresponding to a low-priority AT is released;
a policy for transmission of applications or services over connections or sessions corresponding to different ATs in case that multiple ATs are simultaneously used;
a first timer, used to indicate that in case that successfully registering with a first network or successfully establishing a session via the second AT exceeds a duration of the first timer, a connection or session corresponding to the first AT is released or modified;
first time information, used to indicate application of one or more of above policies within a time range specified by the first time information;
first area information, used to indicate application of one or more of above policies within an area specified by the first area information;
information on a first energy consumption threshold, used to indicate that in case that the UE using the first AT and/or the second AT reaches or exceeds the first energy consumption threshold, one or more of above policies are applied;
information on a first energy efficiency threshold, used to indicate that in case that the UE using the first AT and/or the second AT reaches or falls below the first energy efficiency threshold, one or more of above policies are applied.

43. The communication apparatus of claim 35, wherein the first determination module further comprises a second determination unit,
the second determination unit is used for obtaining the multi-access related subscription data or the first multi-access related policy from a second network function entity.

44. A communication apparatus, comprising:
a second determination module, used for determining multi-access related subscription data or a first multi-access related policy, wherein the multi-access related subscription data or the first multi-access related policy is used to control a user equipment (UE) to use a first access technology (AT) and/or a second AT for communication; and
a control module, used for controlling, based on the multi-access related subscription data or the first multi-access related policy, the UE to use the first AT and/or the second AT for communication;
wherein determining the multi-access related subscription data or the first multi-access related policy comprises:
determining the multi-access related subscription data or the first multi-access related policy based on access related information, wherein the access related information comprises one or a combination of following:
information on energy consumption of the UE using the first AT and/or the second AT;
information on energy consumption of a network corresponding to the first AT and/or the second AT;
information on energy efficiency of the UE using the first AT and/or the second AT; or
information on energy efficiency of a network corresponding to the first AT and/or the second AT.

45. The communication apparatus of claim 44, wherein controlling, based on the multi-access related subscription data or the first multi-access related policy, the UE to use the first AT and/or the second AT for communication comprises:
in case that the UE registers with a first network using the first AT and the second AT, controlling, based on the multi-access related subscription data or the first multi-access related policy, the UE to use the first AT and/or the second AT for communication; or
in case that the UE initiates registration with a first network using the second AT after registering with the first network using the first AT, controlling, based on the multi-access related subscription data or the first multi-access related policy, the UE to use the first AT and/or the second AT for communication.

46. The communication apparatus of claim 44, wherein the control module comprises a second transmission unit,
the second transmission unit is used for transmitting the multi-access related subscription data or the first multi-access related policy to the UE.

47. The communication apparatus of claim 44, wherein controlling, based on the multi-access related subscription data or the first multi-access related policy, the UE to use the first AT and/or the second AT for communication comprises:
controlling the UE to perform one or more of following operations based on the multi-access related subscription data or the first multi-access related policy:
releasing a connection using the first AT;
transferring all sessions using the first AT to a connection using the second AT;
transferring a first session using the first AT to a connection using the second AT;
transferring all quality of service (QoS) flows using the first AT to a connection using the second AT;
transferring all QoS flows of a first session using the first AT to a connection using the second AT;
transferring a first QoS flow of a first session using the first AT to a connection using the second AT; or
transferring a QoS flow of a first application or service using the first AT to a connection using the second AT.

48. The communication apparatus of claim 44, further comprising a second obtainment module,
wherein the second obtainment module is used for obtaining the access related information from a first network function entity.

49. The communication apparatus of claim 48, wherein the second obtainment module comprises a third transmission unit and a second reception unit,
the third transmission unit is used for transmitting a first message to the first network function entity, wherein the first message is used to request the access related information;
the second reception unit is used for receiving the access related information from the first network function entity;
wherein the first message and/or the access related information carries first description information on the UE using the first AT and/or the second AT, and the first description information comprises one or more of following:
an AT type;
frequency information;
a slice identifier;
a data network identifier;
a session identifier;
an application identifier;
UE location information;
second time information, used to indicate applicable time of the access related information;
second area information, used to indicate an applicable area of the access related information;
information on a second energy consumption threshold, used to instruct the first network function entity, in case that the UE using the first AT and/or the second AT reaches or exceeds the second energy consumption threshold, to report the access related information; or
information on a second energy efficiency threshold, used to instruct the first network function entity, in case that the UE using the first AT and/or the second AT reaches or falls below the second energy efficiency threshold, to report the access related information.

50. The communication apparatus of claim 44, wherein the information on energy consumption of the UE using the first AT and/or the second AT comprises one or more of following:
information on energy consumption of the UE using the first AT and/or the second AT to support a specific application or service;
information on energy consumption of the UE using the first AT and/or the second AT to support a session of a specific data network;
information on energy consumption of the UE using the first AT and/or the second AT to support a session of a specific network slice; or
information on statistics or prediction of energy consumption of the UE using the first AT and/or the second AT,
and/or,
wherein the information on energy efficiency of the UE using the first AT and/or the second AT comprises one or more of following:
information on energy efficiency of the UE using the first AT and/or the second AT to support a specific application or service;
information on energy efficiency of the UE using the first AT and/or the second AT to support a session of a specific data network;
information on energy efficiency of the UE using the first AT and/or the second AT to support a session of a specific network slice; or
information on statistics or prediction of energy efficiency of the UE using the first AT and/or the second AT.

51. The communication apparatus of claim 44, wherein the information on energy consumption of the network corresponding to the first AT and/or the second AT comprises one or more of following:
information on current energy consumption of the network corresponding to the first AT and/or the second AT; or
information on statistics or prediction of energy consumption of the network corresponding to the first AT and/or the second AT,
and/or,
wherein the information on energy efficiency of the network corresponding to the first AT and/or the second AT comprises one or more of following:
information on current energy efficiency of the network corresponding to the first AT and/or the second AT; or
information on statistics or prediction of energy efficiency of the network corresponding to the first AT and/or the second AT.

52. A non-transitory readable storage medium storing a computer program, wherein the computer program is used for causing a processor to execute the communication method of any of claims 1 to 9, or the communication method of any of claims 10 to 17.
